# EUROPÄISCHE PATENTSCHRIFT

(11) **EP 3 947 507 B1**
(45) Veröffentlichungstag und Bekanntmachung des Hinweises auf die Patenterteilung: **28.01.2026**
(21) Anmeldenummer: 20714254.8
(22) Anmeldetag: 02.04.2020
(51) Int. Cl.: C08G 18/48, C08G 18/76, C08K 3/04, C08K 3/26, C08G 18/10, C08K 5/103, C08G 18/42, C09J 175/04, C08G 18/75

(54) **ISOCYANATGRUPPEN-HALTIGES POLYMER BASIEREND AUF EINEM DIMERFETTSÄURE-POLYESTERDIOL**
POLYMER BASED ON DIMERIC FATTY ACID POLYESTER DIOL CONTAINING ISOCYANATE GROUPS
POLYMÈRE CONTENANT DES GROUPES ISOCYANATE BASÉ SUR UN POLYESTERDIOL ET DES ACIDES GRAS DIMÈRES

(30) Priorität: 05.04.2019 EP 19167575
(43) Veröffentlichungstag der Anmeldung: 09.02.2022
(73) Patentinhaber: Sika Technology AG, 6340 Baar (CH)
(72) Erfinder: REIMANN, Sven, 8046 Zürich (CH); KUBE, Nicole, 8103 Unterengstringen (CH); SCHLUMPF, Michael, 8143 Stallikon (CH)
(74) Vertreter: Sika Patent Attorneys
(86) Internationale Anmeldenummer: PCT/EP2020/059393
(87) Internationale Veröffentlichungsnummer: WO 2020/201421

(56) Entgegenhaltungen:
- EP-A1- 0 289 945
- WO-A1-01/40343
- WO-A1-03/027160
- WO-A1-03/082944
- WO-A1-2008/147845
- WO-A1-2017/103070
- WO-A1-2018/086029
- WO-A2-2008/068038
- JP-A- 2007 332 241
- JP-A- 2012 116 879
- US-B1- 6 355 317
- BODO M�LLER, WALTER RATH: "Formulierung von Kleb- und Dichtstoffen: das kompetente Lehrbuch f�r Studium und Praxis", 2004, VINCENTZ NETWORK, Hannover, ISBN: 3-87870-791-6, pages: 129 - 132

## Beschreibung

### Technisches Gebiet

Die Erfindung betrifft monomerarme Isocyanatgruppen-haltige Polymere und ihre Verwendung in feuchtigkeitshärtenden Polyurethan-Zusammensetzungen, insbesondere für die Anwendung als Klebstoff für die Ersatzverglasung von Fahrzeugen.

### Stand der Technik

Härtbare Zusammensetzungen auf Basis von Polyurethanen werden oft als Klebstoffe für elastische Verklebungen eingesetzt, beispielsweise im Fahrzeugbau. Dafür sind gute Eigenschaften insbesondere hinsichtlich Lagerstabilität, Applizierbarkeit, Offenzeit, Aushärtegeschwindigkeit, Haftung, Festigkeit, Elastizität, Witterungsbeständigkeit und Gefahrstoff-Einstufung gefordert.

Beliebt sind einkomponentige feuchtigkeitshärtende Systeme, vor allem aufgrund ihrer einfachen Handhabung. Im Allgemeinen zeigen diese Systeme gute Haftungseigenschaften. Es gibt aber Anwendungen auf speziellen Substraten, auf denen das Erreichen einer guten Haftung Schwierigkeiten bereitet. Ein Beispiel dafür ist das Verkleben von Ersatzscheiben in Fahrzeugen, wo der Karosserieflansch als Substrat sowohl Bereiche mit freiliegendem Lack als auch Bereiche mit Rückständen des auf dem Lack anhaftenden, nicht vollständig entfernten bzw. als Haftgrund belassenen alten Klebstoffs ("Restkleberaupe") aufweist. Wenn der neue Klebstoff nicht vollständig auf der Restkleberaupe anhaftet, kann es zu unerwünschtem Wassereintritt oder Windgeräuschen bis hin zum Ablösen der Scheibe kommen. Die heute verfügbaren feuchtigkeitshärtenden Klebstoffe weisen ohne geeignete Vorbehandlung auf Restkleberaupe oft nur eine ungenügende Haftung auf, insbesondere wenn der alte Klebstoff stark gealtert und dadurch hart bzw. spröde geworden ist. Für die Verbesserung der Haftung auf Restkleberaupe können bekannte Haftvermittler, wie Diisocyanat-Oligomere oder Derivate davon, eingesetzt werden; dies führt aber zu Einbussen in der Elastizität des Klebstoffs nach der Aushärtung.

Isocyanatgruppen-haltige Polymere, wie sie in einkomponentigen Polyurethan-Klebstoffen als Bindemittel vorhanden sind und durch Reaktion mit Feuchtigkeit aushärten, werden durch Umsetzung von Polyolen mit monomeren Diisocyanaten hergestellt. Solche Polymere enthalten aufgrund von Kettenverlängerungsreaktionen einen Restgehalt an monomeren Diisocyanaten, typischerweise im Bereich von 0.5 bis 3 Gewichts-%. Monomere Diisocyanate sind aber potentiell gesundheitsschädlich. Zubereitungen enthaltend monomere Diisocyanate müssen insbesondere ab einer Konzentration von 0.1 Gewichts-% mit Gefahrensymbolen und Warnhinweisen auf dem Etikett und in den Datenblättern versehen sein und können in einigen Ländern nur unter Auflagen verkauft und eingesetzt werden.

Polyurethane enthaltend Dimerfettsäure-basierte Polyesterpolyole sind bekannt. Diese werden meist als Bestandteil der Polyolkomponente von zweikomponentigen Polyurethanen eingesetzt, beispielsweise in EP 2,144,944, um die Hydrolyse- und Lösemittelbeständigkeit von Elastomeren zu erhöhen, oder in WO 2018/210568, um eine hohe Dehnung bei hoher Festigkeit zu erhalten. EP 1,476,485 beschreibt zweikomponentige Polyurethane zur Herstellung von mikrozellulärem Polyurethanschaum, wobei die Isocyanatkomponente ein Reaktionsprodukt aus Dimerfettsäure-basiertem Polyesterpolyol und einem hohen Überschuss an 4,4'-Diphenylmethandiisocyanat enthält, welches anschliessend mit einer Polyolkomponente bestehend hauptsächlich aus weiterem Dimerfettsäure-basiertem Polyesterpolyol ausgehärtet wird. Das hier beschriebene Reaktionsprodukt ist aufgrund des hohen NCO-Gehalts nicht geeignet für die Verwendung in feuchtigkeitshärtenden Polyurethan-Zusammensetzungen. Bei der Aushärtung solcher Zusammensetzungen mit Feuchtigkeit würden Blasen entstehen und das entstehende Produkt wäre zu wenig elastisch und dehnbar.

WO2017/103070 beschreibt einen feuchtigkeitshärtenden Polyurethan-Klebstoff mit hoher Frühfestigkeit, welcher für die Applikation erwärmt wird und ein Isocyanatgruppen-haltiges Polymer enthält, welches ein mehrstufig hergestelltes Reaktionsprodukt aus einer Polyolmischung mit unter anderem Dimerfettsäure-basiertem Polyol ist. Dieses Reaktionsprodukt ist sehr hochviskos und aufwendig in der Herstellung. Es ist aufgrund der schlechten Auspressbarkeit nicht geeignet für Klebstoffe, welche bei Raumtemperatur applizierbar sein sollen, und es ermöglicht nicht die erwünschte Haftung auf Restkleberaupe.

### Darstellung der Erfindung

Aufgabe der vorliegenden Erfindung ist es, einen Haftvermittler für bei Raumtemperatur verarbeitbare feuchtigkeitshärtende elastische Polyurethan-Klebstoffe zur Verfügung zu stellen, welcher die Haftung des Klebstoffs auf schwierigen Substraten wie Restkleberaupe verbessert, ohne Einbussen bei weiteren relevanten Produkteigenschaften, insbesondere der Lagerstabilität, Applizierbarkeit, Aushärtegeschwindigkeit, Blasenbildung, Festigkeit, Dehnbarkeit, Elastizität und Gefahrstoff-Einstufung, zu verursachen.

Diese Aufgabe wird mit einem Polymer wie in Anspruch 1 beschrieben gelöst. Das Polymer basiert auf einem monomeren Diisocyanat, insbesondere 4,4'-Diphenylmethandiisocyanat, und einem Dimerfettsäure-basierten Polyester-Diol. Es hat einen NCO-Gehalt im Bereich von 1.5 bis 6 Gewichts-% und einen Gehalt an monomeren Diisocyanaten von höchstens 0.5 Gewichts-%. Das erfindungsgemässe Polymer ist bei Raumtemperatur flüssig und weist eine enge Molekulargewichtsverteilung und eine gut handhabbare Viskosität auf. Es eignet sich ausgezeichnet zur Verwendung als Haftvermittler in feuchtigkeitshärtenden elastischen Polyurethan-Klebstoffen, wo es überraschend gut verträglich ist und insbesondere die Haftung auf Restkleberaupe und die Offenzeit deutlich verbessert, ohne die Aushärtegeschwindigkeit, Festigkeit, Dehnbarkeit oder andere relevante Produkteigenschaften negativ zu beeinflussen. Dabei ist der positive Effekt auf die Haftungseigenschaften und die Offenzeit insofern überraschend, als Isocyanatgruppen-haltige Polymere mit niedrigem Monomergehalt erfahrungsgemäss einer guten Haftung eher entgegenwirken. Aufgrund des niedrigen Monomergehalts kann es auch in hoher Menge eingesezt werden, ohne die Gefahrstoff-Einstufung des Klebstoffes negativ zu beeinflussen. Weiterhin verbessert es die Witterungsbeständigkeit von Polyurethan-Zusammensetzungen, insbesondere von mit Russ gefüllten Klebstoffen, wodurch diese wesentlich weniger zum Ausrussen neigen und somit die Substrate auch nach längerem Gebrauch nicht verschmutzen. Weiterhin bewirkt das erfindungsgemässe Polymer eine matte Oberfläche des Klebstoffs, was von vielen Anwendern im Fall von sichtbaren Klebefugen sehr erwünscht ist.

Überraschenderweise bewirkt das erfindungsgemässe Dimerfettsäure-basierte Polymer bei der Verwendung in feuchtigkeitshärtenden Polyurethan-Klebstoffen weitere unerwartete Vorteile. Besonders überraschend ist sein positiver Einfluss auf die Applikationseigenschaften. Solche Klebstoffe sind bereits bei geringem Gehalt an erfindungsgemässem Polymer bei Raumtemperatur und bei tiefen Umgebungs- und Klebstoff temperaturen besonders einfach aus dem Gebinde auspressbar, bei unverändert guter Standfestigkeit und kurzem Fadenzug.

Zur Verbesserung von Anfangsfestigkeit, Standfestigkeit und Fadenzug enthalten feuchtigkeitshärtende Polyurethan-Klebstoffe insbesondere für den Fahrzeugbau oft eine Schmelzkomponente, typischerweise ein bei Raumtemperatur festes Polyurethanpolymer basierend auf einem kristallinen Polyesterpolyol. Allerdings wird die Auspresskraft des Klebstoffs bei Raumtemperatur und in der Kälte durch die Schmelzkomponente erhöht, und die Standfestigkeit ist stark scherabhängig, was zu Problemen bei der Herstellung und Applikation führen kann. Durch die Verwendung des erfindungsgemässen Dimerfettsäure-basierten Polymers sind überraschenderweise auch Polyurethan-Klebstoffe mit Schmelzkomponente bei Raumtemperatur und in der Kälte deutlich besser auspressbar, und ihre rheologischen Eigenschaften sind wesentlich weniger scherabhängig. Insbesondere ermöglicht das erfindungsgemässe Polymer Klebstoffe, bei denen die Schmelzkomponente in deutlich tieferer Menge eingesetzt oder ganz weggelassen werden kann.

Das erfindungsgemässe Dimerfettsäure-basierte Polyesterurethan-Polymer ermöglicht flüssige, gegebenenfalls pastöse, und somit bei Raumtemperatur verarbeitbare feuchtigkeitshärtende elastische Polyurethan-Zusammensetzungen mit verbesserten Haftungseigenschaften auf speziellen Substraten, insbesondere Restkleberaupe, verbesserten Applikationseigenschaften, insbesondere einer besonders guten Auspressbarkeit auch bei kühlen Temperaturen, wobei der Anstieg der Auspresskraft zwischen Raumtemperatur und 5°C besonders niedrig ist, einer langen Offenzeit, einer matten Oberfläche und einer besseren Witterungsbeständigkeit, bei unverändert guten Eigenschaften in Bezug auf Lagerstabilität, Aushärtegeschwindigkeit, Blasenbildung, Festigkeit, Dehnbarkeit, Elastizität und Gefahrstoff-Einstufung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein bei Raumtemperaur flüssiges Isocyanatgruppen-haltiges Polyesterurethan-Polymer, erhalten aus der Umsetzung von mindestens einem monomeren Diisocyanat und einem Dimerfettsäure-basierten Polyester-Diol mit einer OH-Zahl im Bereich von 28 bis 120 mg KOH/g in einem NCO/OH-Verhältnis im Bereich von 4/1 bis 10/1 und nachfolgender Entfernung eines Grossteils des monomeren Diisocyanats mittels eines geeigneten Trennverfahrens, dadurch gekennzeichnet, dass es einen NCO-Gehalt im Bereich von 1.5 bis 6 Gewichts-% und einen Gehalt an monomeren Diisocyanaten von höchstens 0.5 Gewichts-% aufweist.

Als "monomeres Diisocyanat" wird eine organische Verbindung mit zwei Isocyanatgruppen, die durch einen zweiwertigen Kohlenwasserstoff-Rest mit 4 bis 15 C-Atomen voneinander getrennt sind, bezeichnet.

Als "Polyesterurethan-Polymer" wird ein Polymer bezeichnet, welches als Repetiereinheiten Estergruppen aufweist und zusätzlich Urethangruppen enthält.

Als "Dimerfettsäure-basiertes Polyester-Diol" wird ein Polyester-Diol bezeichnet, welches ausgehend von einer Dimerfettsäure und/oder einem Dimerfettalkohol hergestellt wurde.

Als "NCO-Gehalt" wird der Gehalt an Isocyanatgruppen in Gewichts-% bezogen auf das ganze Polymer bezeichnet.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23°C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Das erfindungsgemässe Polymer kann auch als Polyurethan-Prepolymer bezeichnet werden.

Bevorzugt weist das erfindungsgemässe Polymer einen NCO-Gehalt im Bereich von 1.8 bis 5 Gewichts-%, besonders bevorzugt 2 bis 4 Gewichts-%, insbesondere 2.2 bis 3.4 Gewichts-%, auf. Ein solches Polymer ermöglicht Polyurethan-Zusammensetzungen mit einer attraktiven Kombination aus guter Auspressbarkeit, guten Haftungseigenschaften und hoher Festigkeit.

Bevorzugt weist das erfindungsgemässe Polymer einen Gehalt an monomeren Diisocyanaten von höchstens 0.3 Gewichts-%, insbesondere höchstens 0.2 Gewichts-%, auf. Ein solches Polymer ist besonders geeignet für die Verwendung in Polyurethan-Zusammensetzungen mit weniger als 0.1 Gewichts-% monomeren Diisocyanaten; diese sind auch ohne besondere Schutzvorkehrungen sicher in der Handhabung und und können in vielen Ländern ohne Gefahrstoff-Einstufung verkauft werden.

Als monomere Diisocyanate geeignet sind handelsübliche aromatische, aliphatische oder cycloaliphatische Diisocyanate, insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), Naphthalin-1,5-diisocyanat (NDI), 1,6-Hexandiisocyanat (HDI), 2,2(4),4-Trimethyl-1,6-hexamethylendiisocyanat (TMDI), Cyclohexan-1,3- oder -1,4-diisocyanat, 1-Isocyanato-3,3,5-trimethyl-5-isocyanatomethylcyclohexan (Isophorondiisocyanat oder IPDI), Perhydro-2,4'- oder -4,4'-diphenylmethandiisocyanat (HMDI), 1,3- oder 1,4-Bis(isocyanatomethyl)cyclohexan, m- oder p-Xylylendiisocyanat (XDI), oder Gemische davon.

Das für die Umsetzung verwendete monomere Diisocyanat ist bevorzugt 4,4'-Diphenylmethandiisocyanat (4,4'-MDI), 2,4-Toluylendiisocyanat oder Gemische davon mit 2,6-Toluylendiisocyanat (TDI), 1-Isocyanato-3,3,5-trimethyl-5-isocyanatomethylcyclohexan (IPDI) oder 1,6-Hexandiisocyanat (HDI). Diese Diisocyanate sind einfach erhältlich, preisgünstig und ermöglichen gute mechanische Festigkeiten. Es kann auch eine Kombination aus zwei oder mehr dieser monomeren Diisocyanate verwendet werden.

Besonders bevorzugt ist IPDI. Ein solches Polymer ist besonders geeignet in feuchtigkeitshärtenden Polyurethan-Zusammensetzungen mit besonders hoher Lichtstabilität.

Am meisten bevorzugt als monomeres Diisocyanat ist 4,4'-MDI. Dabei ist das 4,4'-MDI insbesondere von einer Qualität, welche nur geringe Anteile an 2,4'-und/oder 2,2'-Diphenylmethandiisocyanat enthält und bei Raumtemperatur fest ist. Ein solches Polymer härtet besonders schnell aus und ermöglicht besonders hohe Festigkeiten.

Das für die Umsetzung verwendete Dimerfettsäure-basierte Polyester-Diol ist typischerweise bei Raumtemperatur flüssig. Es weist eine OH-Zahl im Bereich von 28 bis 120 mg KOH/g auf.

Solche Dimerfettsäure-basierte Polyester-Diole weisen ein mittleres Molekulargewicht Mₙ im Bereich von 950 bis 4'000 g/mol auf. Sie sind weitgehend linear aufgebaut und haben eine mittlere OH-Funktionalität von etwa 2.

Bevorzugt ist das Dimerfettsäure-basierte Polyester-Diol amorph.

Geeignete Dimerfettsäure-basierte Polyester-Diole werden insbesondere erhalten aus der Veresterung von mindestens einer Dimerfettsäure und/oder mindestens einem Dimerfettalkohol mit einem Diol, wie beispielsweise Diethylenglykol oder Butandiol, und/oder einer Dicarbonsäure, wie beispielsweise Adipinsäure, bei einer solchen Stöchiometrie, dass das Produkt amorph und bei Raumtemperatur flüssig ist und eine OH-Zahl im Bereich von 28 bis 120 mg KOH/g aufweist.

Bevorzugt enthält das Dimerfettsäure-basierte Polyester-Diol einen Gehalt an Kohlenstoff-Atomen aus erneuerbaren Quellen gemäss ASTM D6866 bezogen auf den totalen Kohlenstoffgehalt im Bereich von 50 bis 100%, bevorzugt 60 bis 95%, insbesondere 70 bis 90%. Ein solches Polyester-Diol ist amorph, hydrophob und besonders gut verträglich in Polyurethan-Klebstoffen.

Bevorzugt weist das Dimerfettsäure-basierte Polyester-Diol eine OH-Zahl im Bereich von 34 bis 120 mg KOH/g, insbesondere 52 bis 60 mg KOH/g, auf. Ein solches Dimerfettsäure-basiertes Polyester-Diol hat ein mittleres Molekulargewicht Mₙ im Bereich von 950 bis 3'300 g/mol, insbesondere im Bereich von 1'900 bis 2'200 g/mol. Ein solches Polymer ermöglicht Polyurethan-Zusammensetzungen mit einer besonders attraktiven Kombination aus guter Auspressbarkeit, guten Haftungseigenschaften und hoher Festigkeit.

Geeignet sind insbesondere kommerziell erhältliche amorphe Dimerfettsäure-basierte Polyester-Diole, insbesondere die unter dem Handelsnamen Priplast^{®} erhältlichen Typen Priplast^{®} 1837, 1838, 3187, 3196, 3197, 3199 oder 3238 (von Croda). Davon bevorzugt ist Priplast^{®} 1838.

Das erfindungsgemässe Polymer wird erhalten aus der Umsetzung von mindestens einem monomeren Diisocyanat und dem Dimerfettsäure-basierten Polyester-Diol in einem NCO/OH-Verhältnis im Bereich von 4/1 bis 10/1. Bevorzugt liegt das NCO/OH-Verhältnis im Bereich von 4/1 bis 8/1, insbesondere 4/1 bis 7/1, am meisten bevorzugt 5/1 bis 7/1.

Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Nach der Umsetzung wird das im Reaktionsgemisch verbleibende monomere Diisocyanat bis auf den beschriebenen Restgehalt mittels eines geeigneten Trennverfahrens entfernt.

Als Trennverfahren bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere Diisocyanat in einem Kurzwegverdampfer bei einer Manteltemperatur im Bereich von 120 bis 200°C und einem Druck von 0.001 bis 0.5 mbar entfernt wird.

Im Fall des als monomeres Diisocyanat bevorzugten 4,4'-MDI ist das destillative Entfernen besonders anspruchsvoll. Es muss beispielsweise darauf geachtet werden, dass das Kondensat nicht fest wird und die Anlage verstopft. Bevorzugt wird bei einer Manteltemperatur im Bereich von 160 bis 200°C bei 0.001 bis 0.5 mbar gefahren und das entfernte Monomer bei einer Temperatur im Bereich von 40 bis 60°C kondensiert.

Bevorzugt erfolgt die Umsetzung des monomeren Diisocyanats mit dem Dimerfettsäure-basierten Polyester-Diol und das anschliessende Entfernen des Grossteils des im Reaktionsgemisch verbliebenen monomeren Diisocyanats ohne den Einsatz von Lösemitteln bzw. Schleppmitteln.

Bevorzugt wird das nach der Umsetzung entfernte monomere Diisocyanat anschliessend wiederverwendet, d.h. erneut für die Herstellung von Isocyanatgruppen-haltigem Polymer eingesetzt.

Das erfindungsgemässe Polymer hat bevorzugt eine Viskosität bei 20°C von höchstens 1'000 Pa·s, insbesondere höchstens 500 Pa·s. Bevorzugt liegt die Viskosität bei 20°C im Bereich von 100 bis 1'000 Pa·s, insbesondere 100 bis 500 Pa·s. Bevorzugt liegt die Viskosität bei 30°C im Bereich von 50 bis 500 Pa·s, insbesondere 50 bis 200 Pa·s. Bevorzugt liegt die Viskosität bei 40°C im Bereich von 25 bis 200 Pa·s, insbesondere 25 bis 100 Pa·s. Bevorzugt liegt die Viskosität bei 60°C im Bereich von 5 bis 25 Pa·s, insbesondere 5 bis 20 Pa·s. Dabei wird die Viskosität bestimmt mit einem Kegel-Platten-Viskosimeter mit einem Kegeldurchmesser 25 mm, Kegelwinkel 1°, Kegelspitze-Platten-Abstand 0.5 mm bei einer Scherrate von 50 s⁻¹.

Bei der Umsetzung reagieren die OH-Gruppen des Dimerfettsäure-basierten Polyester-Diols mit den Isocyanatgruppen des monomeren Diisocyanats. Dabei kommt es auch zu sogenannten Kettenverlängerungsreaktionen, indem OH-Gruppen und/oder Isocyanatgruppen von Umsetzungsprodukten zwischen Diol und monomerem Diisocyanat reagieren. Je höher das NCO/OH-Verhältnis gewählt wird, desto weniger Kettenverlängerungsreaktionen finden statt, und desto niedriger ist die Polydispersität und somit auch die Viskosität des erhaltenen Polymers. Ein Mass für die Kettenverlängerungsreaktion ist das mittlere Molekulargewicht des Polymers bzw. die Breite und Verteilung der Peaks in der GPC-Analyse. Ein weiteres Mass ist der effektive NCO-Gehalt des Monomer-befreiten Polymers im Verhältnis zum theoretischen NCO-Gehalt berechnet aus der Umsetzung jeder OH-Gruppe mit einem monomeren Diisocyanat.

Bevorzugt beträgt der NCO-Gehalt im erfindungsgemässen Polymer mindestens 75%, insbesondere mindestens 80%, des theoretischen NCO-Gehalts, welcher aus der Addition von einem mol monomerem Diisocyanat pro mol OH-Gruppen des Dimerfettsäure-basierten Polyester-Diols berechnet wird. Ein solches Polymer ist niedrigviskos und ermöglicht gute Applikationseigenschaften.

Ein besonders bevorzugtes erfindungsgemässes Polyesterurethan-Polymer wird erhalten aus der Umsetzung von 4,4'-MDI und einem amorphen Dimerfettsäure-basierten Polyester-Diol mit einer OH-Zahl im Bereich von 34 bis 120 mg KOH/g, insbesondere 52 bis 60 mg KOH/g, in einem NCO/OH-Verhältnis im Bereich von 4/1 bis 10/1 und nachfolgender Entfernung von 4,4'-MDI mittels Destillation und weist schliesslich einen NCO-Gehalt im Bereich von 2 bis 5 Gewichts-%, insbesondere 2.2 bis 4 Gewichts-%, einen Gehalt an monomeren Diisocyanaten von höchstens 0.3 Gewichts-% und eine Viskosität bei 20°C im Bereich von 100 bis 1'000 Pa·s, bevorzugt 100 bis 500 Pa·s, auf.

Das erfindungsgemässe Polymer ist bei Raumtemperatur flüssig und somit einfach handhabbar und hat aufgrund des geringen Monomergehalts keine oder nur eine milde Gefahrstoff-Einstufung und eignet sich als Haftvermittler in feuchtigkeitshärtenden elastischen Polyurethan-Klebstoffen, wo es zusätzlich die Applikationseigenschaften und die Witterungsbeständigkeit verbessert. Ein weiterer Gegenstand der Erfindung ist die Verwendung des erfindungsgemässen Polyesterurethan-Polymers als Haftvermittler in einer feuchtigkeitshärtenden Polyurethan-Zusammensetzung.

Für die Verwendung als Haftvermittler wird das erfindungsgemässe Polyesterurethan-Polymer in einer Menge im Bereich von 0.5 bis 15 Gewichts-%, bevorzugt 1 bis 10 Gewichts-%, bezogen auf die gesamte Polyurethan-Zusammensetzung, eingesetzt.

Durch die Verwendung als Haftvermittler werden die Haftungseigenschaften der feuchtigkeitshärtenden Polyurethan-Zusammensetzung verbessert. Insbesondere wird die Haftung auf Restkleberaupe verbessert. Diese Haftung ist vor allem beim Ersatz von Fahrzeugscheiben wichtig, wenn die neue Scheibe mit feuchtigkeitshärtendem Polyurethan-Klebstoff eingeklebt wird, wobei als Substrat auch Reste von der alten Klebstoffraupe, mit welcher die ersetzte Scheibe eingeklebt war, vorhanden sind. Eine sehr gute Haftung auf Restkleberaupe ist auch dann wichtig, wenn nur wenige solcher Reste auf dem Substrat vorhanden sind, da durch punktuell unvollständige Haftung Wassereintrag oder störende Windgeräusche beim Betrieb des Fahrzeugs entstehen können.

Bei der Verwendung als Haftvermittler zeigt das erfindungsgemässe Polymer weitere erwünschte Effekte, wie eine verbesserte Auspressbarkeit der Zusammensetzung bei guter, scherunabhängiger Standfestigkeit und kurzem Fadenzug, ein geringer Anstieg der Auspresskraft in der Kälte, eine bessere Witterungsbeständigkeit und eine matte Oberfläche der Zusammensetzung, wobei weder Einbussen bei der Lagerstabilität, der Aushärtung, den mechanischen Eigenschaften oder der Gefahrstoff-Einstufung auftreten.

Ein weiterer Gegenstand der Erfindung ist eine feuchtigkeitshärtende Polyurethan-Zusammensetzung, welche geeignet ist als elastischer Klebstoff und/oder Dichtstoff, enthaltend
- mindestens ein Isocyanatgruppen-haltiges Polyetherurethan-Polymer, und
- das beschriebene Isocyanatgruppen-haltige Polyesterurethan-Polymer, wobei die feuchtigkeitshärtende Polyurethan-Zusammensetzung bei einer Temperatur von 23 °C flüssig, gegebenenfalls pastös, und somit bei einer Temperatur von 23 °C gut verarbeitbar ist.

Somit ist die feuchtigkeitshärtende Polyurethan-Zusammensetzung bei Raumtemperatur flüssig, gegebenenfalls pastös, und somit bei Raumtemperatur gut verarbeitbar.

Bevorzugt enthält die feuchtigkeitshärtende Polyurethan-Zusammensetzung 0.5 bis 15 Gewichts-%, bevorzugt 1 bis 10 Gewichts-%, des Isocyanatgruppen-haltigen Polyesterurethan-Polymers.

Geeignet als Isocyanatgruppen-haltiges Polyetherurethan-Polymer ist insbesondere ein Polyetherurethan-Polymer mit mehrheitlich Polyoxypropylen-Struktureinheiten. Ein solches Polymer ist besonders geeignet als hauptsächliches Bindemittel für bei Raumtemperatur verarbeitbare elastische Kleb-und/oder Dichtstoffe mit hoher Dehnbarkeit.

Bevorzugt bestehen die Polyether-Segmente im Polyetherurethan-Polymer aus mindestens 80 % 1,2-Propylenoxy-Einheiten und gegebenenfalls zusätzlich 1,2-Ethylenoxy-Einheiten.

Bevorzugt hat das Isocyanatgruppen-haltige Polyetherurethan-Polymer ein mittleres Molekulargewicht Mₙ im Bereich von 2'000 bis 20'000 g/mol, bevorzugt 3'000 bis 15'000 g/mol.

Bevorzugt ist es bei Raumtemperatur flüssig.

Bevorzugt hat das Isocyanatgruppen-haltige Polyetherurethan-Polymer einen NCO-Gehalt im Bereich von 1 bis 5 Gewichts-%, insbesondere 1 bis 3 Gewichts-%.

Ein geeignetes Isocyanatgruppen-haltiges Polyetherurethan-Polymer wird insbesondere erhalten aus der Umsetzung von mindestens einem Polyetherpolyol mit einer überstöchiometrischen Menge von mindestens einem monomeren Diisocyanat. Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Das NCO/OH-Verhältnis liegt bevorzugt im Bereich von 1.3/1 bis 10/1. Das nach der Umsetzung der OH-Gruppen im Reaktionsgemisch verbleibende monomere Diisocyanat kann entfernt werden, insbesondere mittels Destillation. Für den Fall, dass überschüssiges monomeres Diisocyanat mittels Destillation entfernt wird, liegt das NCO/OH-Verhältnis bei der Umsetzung bevorzugt im Bereich von 3/1 bis 10/1, insbesondere 4/1 bis 7/1, und das erhaltene Isocyanatgruppen-haltige Polymer enthält nach der Destillation bevorzugt höchstens 0.5 Gewichts-%, besonders bevorzugt höchstens 0.3 Gewichts-%, monomeres Diisocyanat. Dabei wird monomeres Diisocyanat insbesondere mittels Kurzwegdestillation im Vakuum entfernt.

Für den Fall, dass kein überschüssiges monomeres Diisocyanat aus dem Polymer entfernt wird, liegt das NCO/OH-Verhältnis bei der Umsetzung bevorzugt im Bereich von 1.3/1 bis 2.5/1. Ein solches Polyetherurethan-Polymer enthält insbesondere höchstens 3 Gewichts-%, bevorzugt höchstens 2 Gewichts-%, monomeres Diisocyanat.

Als monomeres Diisocyanat bevorzugt sind die bereits genannten aromatischen, aliphatischen oder cycloaliphatischen Diisocyanate, insbesondere MDI, TDI, HDI oder IPDI, oder Gemische davon.

Am meisten bevorzugt ist 4,4'-MDI. Damit werden elastische Kleb- und/oder Dichtstoffe mit besonders hoher Festigkeit bei hoher Dehnbarkeit erhalten.

Geeignete Polyetherpolyole sind handelsübliche Polyole oder Mischungen davon, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder drei aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD).

Bevorzugte Polyetherpolyole sind Polyoxypropylen-Diole oder Polyoxypropylen-Triole, oder sogenannte Ethylenoxid-terminierte (EO-capped bzw. EOtipped) Polyoxypropylen-Diole oder -Triole. Letztere sind Polyoxyethylenpolyoxypropylen-Mischpolyole, die insbesondere dadurch erhalten werden, dass Polyoxypropylen-Diole oder -Triole nach Abschluss der Polypropoxylierungsreaktion mit Ethylenoxid weiter alkoxyliert werden und dadurch primäre Hydroxylgruppen aufweisen.

Bevorzugt sind Polyetherpolyole mit einer OH-Zahl im Bereich von 6 bis 280 mg KOH/g, insbesondere 7.5 bis 112 mg KOH/g.

Bevorzugt sind Polyetherpolyole mit einem mittleren Molekulargewicht Mₙ im Bereich von 400 bis 20'000 g/mol, insbesondere 1'000 bis 15'000 g/mol. Bevorzugt sind Polyetherpolyole mit einer mittleren OH-Funktionalität im Bereich von 1.6 bis 3.

Bei der Herstellung des Isocyanatgruppen-haltigen Polyetherurethan-Polymers können auch Anteile von zwei- oder mehrfunktionellen Alkoholen mitverwendet werden.

In einer bevorzugten Ausführungsform der Erfindung enthält das Isocyanatgruppen-haltige Polyetherurethan-Polymer nur einen geringen Gehalt an monomeren Diisocyanaten. Bevorzugt enthält es höchstens 0.5 Gewichts-%, besonders bevorzugt höchstens 0.3 Gewichts-%, insbesondere höchstens 0.2 Gewichts-%, monomere Diisocyanate. Ein solches Polymer ermöglicht Polyurethan-Zusammensetzungen mit besonders attraktiver Gefahrstoff-Einstufung.

Besonders bevorzugt ist ein Isocyanatgruppen-haltiges Polyetherurethan-Polymer mit einem NCO-Gehalt im Bereich von 1 bis 2.5 Gewichts-%, insbesondere 1.3 bis 2.1 Gewichts-%, und einem Gehalt an monomeren Diisocyanaten von höchstens 0.3 Gewichts-%, welches erhalten wird aus der Umsetzung von mindestens einem monomerem Diisocyanat und einem Polyether-Triol mit einer mittleren OH-Funktionalität im Bereich von 2.2 bis 3 und einer OH-Zahl im Bereich von 20 bis 42 mg KOH/g in einem NCO/OH-Verhältnis von mindestens 3/1 und nachfolgender Entfernung eines Grossteils der monomeren Diisocyanate mittels eines geeigneten Trennverfahrens. Bevorzugt als monomeres Diisocyanat ist IPDI oder 4,4'-MDI, insbesondere 4,4'-MDI.

Weiterhin besonders bevorzugt ist ein lineares Isocyanatgruppen-haltiges Polyetherurethan-Polymer mit einem NCO-Gehalt im Bereich von 1 bis 2.5 Gewichts-%, insbesondere 1.3 bis 2.1 Gewichts-%, und einem Gehalt an monomeren Diisocyanaten von höchstens 0.3 Gewichts-%, erhalten aus der Umsetzung von mindestens einem monomeren Diisocyanat mit einem Polyoxyproylen-Diol mit einer OH-Zahl im Bereich von 13 bis 38 mg KOH/g, insbesondere 22 bis 32 mg KOH/g, in einem NCO/OH-Verhältnis von mindestens 3/1 und nachfolgender Entfernung eines Grossteils der monomeren Diisocyanate mittels eines geeigneten Trennverfahrens. Bevorzugt als monomeres Diisocyanat ist IPDI oder 4,4'-MDI, insbesondere 4,4'-MDI.

Weiterhin besonders bevorzugt ist eine Mischung dieser beiden besonders bevorzugten Polyetherurethan-Polymere.

Bevorzugt enthält die feuchtigkeitshärtende Polyurethan-Zusammensetzung zusätzlich mindestens einen weiteren Bestandteil ausgewählt aus Schmelzkomponenten, blockierten Aminen, Füllstoffen, Weichmachern, Diisocyanat-Oligomeren, Katalysatoren und Stabilisatoren.

In einer Ausführungsform der Erfindung enthält die feuchtigkeitshärtende Polyurethan-Zusammensetzung bevorzugt zusätzlich mindestens eine Schmelzkomponente.

Als Schmelzkomponente geeignet ist insbesondere ein bei Raumtemperatur festes Isocyanatgruppen-haltiges Polyesterurethan-Polymer, welches erhalten wird aus der Umsetzung von mindestens einem monomeren Diisocyanat, insbesondere 4,4'-MDI, und mindestens einem kristallinen Polyester- oder Polycarbonat-Diol.

Als Polyester-Diol geeignet sind insbesondere OH-funktionelle Polyester von Adipinsäure oder Sebacinsäure oder Dodecandicarbonsäure mit 1,4-Butandiol oder 1,6-Hexandiol.

Als Polycarbonat-Diol geeignet sind insbesondere OH-funktionelle Polycarbonate von 1,6-Hexandiol.

Ein solches Polymer ist typischerweise bei Raumtemperatur fest und hat zumindest partiell kristallinen Charakter.

Eine solche Schmelzkomponente ist einerseits geeignet für Klebstoffe, welche im erwärmten Zustand, beispielsweise mit einer Temperatur von etwa 60 °C, appliziert werden und nach der Applikation sehr schnell eine hohe Anfangsfestigkeit aufweisen, so dass die verklebten Teile selbsttragend sind und nicht fixiert werden müssen. Dabei liegt die Schmelzkomponente im erwärmten Klebstoff bei der Applikation geschmolzen vor und kristallisiert beim Abkühlen des applizierten Klebstoffs aus. Weiterhin ist eine solche Schmelzkomponente geeignet für Klebstoffe, welche bei Umgebungstemperatur appliziert werden, wobei die Schmelzkomponente in auskristallisierter Form vorliegt und eine erhöhte Standfestigkeit bewirkt. Die Schmelzkomponente ist aber aufwendig in der Handhabung und die damit erreichte Standfestigkeit ist stark scherabhängig, was zu Problemen bei der Herstellung und Applikation führen kann. Zudem erschwert die Schmelzkomponente die Auspressbarkeit des Klebstoffs bei Raumtemperatur und bei kalten Umgebungs- oder Klebstofftemperaturen. Das erfindungsgemässe Dimerfettsäure-basierte Polyesterurethan-Polymer ermöglicht Klebstoffe mit einem gewissen Anteil an Schmelzkomponente, welche bei Raumtemperatur und in der Kälte besser auspressbar sind. Weiterhin ermöglicht das erfindungsgemässe Dimerfettsäure-basierte Polyesterurethan-Polymer Klebstoffe mit sehr guter Standfestigkeit, bei denen die Schmelzkomponente in deutlich tieferer Menge eingesetzt wird oder die ganz frei von Schmelzkomponente sind.

In einer weiteren Ausführungsform der Erfindung enthält die feuchtigkeitshärtende Polyurethan-Zusammensetzung bevorzugt zusätzlich mindestens ein blockiertes Amin.

Ein geeignetes blockiertes Amin weist bevorzugt mindestens eine Aldiminogruppe oder Oxazolidinogruppe auf. Bei Kontakt mit Feuchtigkeit reagiert es unter Hydrolyse und Freisetzung der Aminogruppe mit vorhandenen Isocyanatgruppen und kann eine schnelle, blasenfreie Aushärtung, eine besonders nichtklebrige Oberfläche und/oder besonders gute mechanische Eigenschaften begünstigen.

Bevorzugte Oxazolidine sind Mono-Oxazolidine oder Bis-Oxazolidine, insbesondere solche abgeleitet von Isobutyraldehyd, Benzaldehyd oder substituiertem Benzaldehyd, insbesondere Benzaldehyd, welches in para-Stellung mit einer gegebenenfalls verzweigten Alkylgruppe mit 10 bis 14 C-Atomen substituiert ist.

Besonders bevorzugt sind Mono-Oxazolidine abgeleitet von N-Alkylethanolaminen wie N-n-Butylethanolamin, oder Bis-Oxazolidine aus der Umsetzung von OH-funktionellen Mono-Oxazolidinen abgeleitet von Diethanolamin mit Diisocyanaten, insbesondere 1,6-Hexandiisocyanat.

Geeignete Aldimine sind insbesondere Di- oder Trialdimine aus der Umsetzung von handelsüblichen primären Di- oder Triaminen mit Aldehyden, welche nicht enolisierbar sind. Dies sind Aldehyde, welche in alpha-Stellung zum Kohlenstoffatom der Aldehydgruppe kein Wasserstoffatom aufweisen.

Bevorzugte blockierte Amine sind ausgewählt aus Aldiminen der Formel (I) und (II), 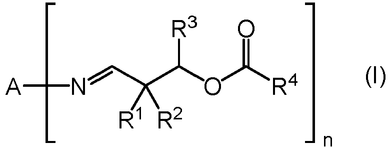 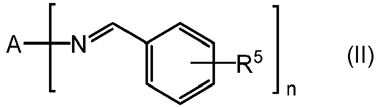 wobei
n für 2 oder 3 steht,
A für einen n-wertigen, gegebenenfalls Ether-Sauerstoff aufweisendenen Kohlenwasserstoffrest mit einem Molekulargewicht im Bereich von 28 bis 6'000 g/mol steht,
R¹ und R² unabhängig voneinander jeweils für einen einwertigen Kohlenwasserstoffrest mit 1 bis 12 C-Atomen oder zusammen für einen zweiwertigen Kohlenwasserstoffrest mit 4 bis 12 C-Atomen, der Teil eines gegebenenfalls substituierten, carbocyclischen Rings mit 5 bis 8, bevorzugt 6, C-Atomen ist, stehen,
R³ für einen Wasserstoffrest oder einen linearen oder verzweigten Alkyl-, Arylalkyl- oder Alkoxycarbonyl-Rest mit 1 bis 12 C-Atomen steht,
R⁴ für einen Wasserstoffrest oder einen einwertigen Kohlenwasserstoffrest mit 1 bis 20 C-Atomen steht, und
R⁵ für einen Alkyl- oder Alkoxy-Rest mit 6 bis 20 C-Atomen steht.

Bevorzugt steht A für einen alipahtischen, cycloaliphatischen oder arylaliphatischen Rest, insbesondere mit einem Molekulargewicht im Bereich von 28 bis 500 g/mol, insbesondere für einen Rest ausgewählt aus der Gruppe bestehend aus 1,6-Hexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis-(methylen), 1,3-Phenylen-bis(methylen), 1,2-Cyclohexylen, 1,3-Cyclohexylen, 1,4-Cyclohexylen, Methylen-bis(2-methylcyclohexan-4-yl), (Bicyclo[2.2.1]heptan-2,5(2,6)-diyl)dimethylen, (Tricyclo[5.2.1.0^{2,6}]decan-3(4),8(9)-diyl)dimethy-len, α,ω-Polyoxypropylen mit einem mittleren Molekulargewicht Mₙ im Bereich von 170 bis 500 g/mol und Trimethylolpropan- oder Glycerin-gestartetes Tris-(ω-polyoxypropylen) mit einem mittleren Molekulargewicht Mₙ im Bereich von 330 bis 500 g/mol.

Bevorzugt stehen R¹ und R² jeweils für Methyl.

Bevorzugt steht R³ für einen Wasserstoffrest.

Bevorzugt steht R⁴ für Methyl oder Undecyl.

Bevorzugt steht R⁵ für einen in para-Stellung stehenden, gegebenenfalls verzweigten Alkylrest mit 10 bis 14 C-Atomen.

Besonders bevorzugte blockierte Amine sind ausgewählt aus der Gruppe bestehend aus N,N'-Bis(2,2-dimethyl-3-lauroyloxypropyliden)hexylen-1,6-diamin, N,N'-Bis(2,2-dimethyl-3-acetoxypropyliden)-3-aminomethyl-3,5,5-trimethylcyclohexylamin, N,N'-Bis(2,2-dimethyl-3-lauroyloxypropyliden)-3-aminomethyl-3,5,5-trimethylcyclohexylamin, N,N'-Bis(4-C₁₀₋₁₄-alkylbenzyliden)-3-aminomethyl-3,5,5-trimethylcyclohexylamin, N,N'-Bis(2,2-dimethyl-3-acetoxypropyliden)-polyoxypropylendiamin mit einem mittleren Molekulargewicht Mₙ im Bereich von 450 bis 880 g/mol, N,N'-Bis(2,2-dimethyl-3-lauroyloxypropyliden)polyoxy-propylendiamin mit einem mittleren Molekulargewicht Mₙ im Bereich von 750 bis 1'050 g/mol, N,N'-Bis(4-C₁₀₋₁₄-alkylbenzyliden)polyoxypropylendiamin mit einem mittleren Molekulargewicht Mₙ im Bereich von 680 bis 1'100 g/mol, N,N',N"-Tris(2,2-dimethyl-3-acetoxypropyliden)polyoxypropylentriamin mit einem mittleren Molekulargewicht Mₙ im Bereich von 730 bis 880 g/mol, N,N',N"-Tris(2,2-dimethyl-3-lauroyloxypropyliden)polyoxypropylentriamin mit einem mittleren Molekulargewicht Mₙ im Bereich von 1'150 bis1'300 g/mol und N,N',N"-Tris(4-C₁₀₋₁₄-alkylbenzyliden)polyoxypropylentriamin mit einem mittleren Molekulargewicht Mₙ im Bereich von 1'000 bis 1'350 g/mol.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Leichtfüllstoffe wie Glashohlkugeln oder gasgefüllte Kunststoffhohlkugeln (microspheres), insbesondere die unter dem Handelsnamen Expancel^{®} (von Akzo Nobel) erhältlichen Typen.

Bevorzugt sind Calciumcarbonate, welche gegebenenfalls mit Fettsäuren, insbesondere Stearaten, beschichtet sind, calcinierte Kaoline, hochdisperse Kieselsäuren oder industriell hergestellte Russe.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate bzw. 1,2-Cyclohexandicarbonsäureester, insbesondere hydriertes Diisononylphthalat bzw. Diisononyl-1,2-cyclohexandicarboxylat (DINCH), Terephthalate, insbesondere Bis(2-ethylhexyl)terephthalat (DOTP) oder Diisononylterephthalat (DINT), hydrierte Terephthalate bzw. 1,4-Cyclohexandicarbonsäureester, insbesondere hydriertes Bis(2-ethylhexyl)terephthalat bzw. Bis(2-ethylhexyl)-1,4-cyclohexan-dicarboxylat oder hydriertes Diisononylterephthalat bzw. Diisononyl-1,4-cyclo-hexandicarboxylat, Isophthalate, Trimellitate, Adipate, insbesondere Dioctyladipat, Azelate, Sebacate, Benzoate, Glykolether, Glykolester, Weichmacher mit Polyetherstruktur, insbesondere Polypropylenoxid-monole, -diole oder -triole mit blockierten Hydroxylgruppen, insbesondere in der Form von Acetatgruppen, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Bevorzugte Weichmacher sind Phthalate oder Weichmacher mit Polyetherstruktur.

Geeignete Diisocyanat-Oligomere sind insbesondere HDI-Biurete wie Desmodur^{®} N 100 oder N 3200 (von Covestro), Tolonate^{®} HDB oder HDB-LV (von Vencorex) oder Duranate^{®} 24A-100 (von Asahi Kasei); HDI-Isocyanurate wie Desmodur^{®} N 3300, N 3600 oder N 3790 BA (alle von Covestro), Tolonate^{®} HDT, HDT-LV oder HDT-LV2 (von Vencorex), Duranate^{®} TPA-100 oder THA-100 (von Asahi Kasei) oder Coronate^{®} HX (vonTosoh Corp.); HDI-Uretdione wie Desmodur^{®} N 3400 (von Covestro); HDI-Iminooxadiazindione wie Desmodur^{®} XP 2410 (von Covestro); HDI-Allophanate wie Desmodur^{®} VP LS 2102 (von Covestro); IPDI-Isocyanurate wie beispielsweise in Lösung als Desmodur^{®} Z 4470 (von Covestro) oder in fester Form als Vestanat^{®} T1890/ 100 (von Evonik Industries); TDI-Oligomere wie Desmodur^{®} IL (von Covestro); oder gemischte Isocyanurate auf Basis TDI/HDI wie Desmodur^{®} HL (von Covestro).

Geeignete Katalysatoren sind Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Für den Fall, dass die feuchtigkeitshärtende Polyurethan-Zusammensetzung blockierte Amine enthält, sind geeignete Katalysatoren weiterhin Katalysatoren für die Hydrolyse der blockierten Aminogruppen, insbesondere organische Säuren, insbesondere Carbonsäuren wie 2-Ethylhexansäure, Laurinsäure, Stearinsäure, Isostearinsäure, Ölsäure, Neodecansäure, Benzoesäure, Salicylsäure oder 2-Nitrobenzoesäure, organische Carbonsäureanhydride wie Phthalsäureanhydrid, Hexahydrophthalsäureanhydrid oder Hexahydromethylphthalsäureanhydrid, Silylester von Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester. Besonders bevorzugt sind Carbonsäuren, insbesondere aromatische Carbonsäuren wie Benzoesäure, 2-Nitrobenzoesäure oder insbesondere Salicylsäure.

Geeignet sind insbesondere auch Kombinationen von verschiedenen Katalysatoren.

Geeignete Stabilisatoren sind insbesondere Stabilisatoren gegen Oxidation, Wärme, Licht oder UV-Strahlung, insbesondere Titandioxide, Eisenoxide, Zinkoxide, Benzophenone, Benzotriazole, Verbindungen mit 2,6-Di-tert.butylphenol-Gruppen, wie sie beispielsweise unter dem Handelsnamen Irganox^{®} (von BASF) bekannt sind, Verbindungen mit 2,2,6,6-Tetramethylpiperidin-Gruppen, sogenannte HALS (hindered amine light stabilizers), wie sie beispielsweise unter dem Handelsnamen Tinuvin^{®} (von BASF) bekannt sind, oder Phosphor-haltige Verbindungen, wie sie beispielsweise unter dem Handelsnamen Irgafos^{®} (von BASF) bekannt sind.

Die feuchtigkeitshärtende Polyurethan-Zusammensetzung kann weitere Zusätze enthalten, insbesondere
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- Trocknungsmittel, insbesondere Molekularsiebpulver, Calciumoxid, hochreaktive Isocyanate wie p-Tosylisocyanat, Mono-Oxazolidine wie Incozol^{®} 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- weitere Katalysatoren, welche die Reaktion der Isocyanatgruppen beschleunigen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- Lösemittel, insbesondere Aceton, Methylacetat, tert. Butylacetat, 1-Methoxy-2-propylacetat, Ethyl-3-ethoxypropionat, Diisopropylether, Diethylenglykoldiethylether, Ethylenglykoldiethylether, Ethylenglykolmonobutylether, Ethylen-glykolmono-2-ethylhexylether, Acetale wie Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, insbesondere Solvesso^{™}-Typen (von Exxon), sowie Propylencarbonat, Dimethylcarbonat, Butyrolacton, N-Methylpyrrolidon, N-Ethylpyrrolidon, p-Chlorobenzotrifluorid oder Benzotrifluorid;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)-phosphat, Tris(2-ethylhexyl)phosphat, Tris(chlorisopropyl)phosphat, Tris-(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- Additive, insbesondere Netzmittel, Verlaufmittel, Entschäumer, Entlüfter oder Biozide;
oder weitere üblicherweise in feuchtigkeitshärtenden Polyurethan-Zusammensetzungen eingesetzte Substanzen.

Es kann sinnvoll sein, gewisse Substanzen vor dem Einmischen in die Zusammensetzung chemisch oder physikalisch zu trocknen.

Bevorzugt enthält die erfindungsgemässe Polyurethan-Zusammensetzung wenig Lösemittel. Insbesondere enthält sie weniger als 5 Gewichts-%, bevorzugt weniger als 2.5 Gewichts-%, Lösemittel. Am meisten bevorzugt ist die erfindungsgemässe Polyurethan-Zusammensetzung im Wesentlichen frei von Lösemitteln.

Bevorzugt enthält die feuchtigkeitshärtende Polyurethan-Zusammensetzung
- 20 bis 60 Gewichts-% Isocyanatgruppen-haltiges Polyetherurethan-Polymer,
- 0.5 bis 10 Gewichts-% erfindungsgemässes Dimerfettsäure-basiertes Isocyanatgruppen-haltiges Polyesterurethan-Polymer,
- 0 bis 5 Gewichts-% Schmelzkomponente,
- 20 bis 60 Gewichts-% Füllstoffe,
- 0 bis 35 Gewichts-% Weichmacher,
und gegebenenfalls weitere Bestandteile, insbesondere blockierte Amine, Diisocyanat-Oligomere, Katalysatoren oder Stabilisatoren.

Bevorzugt enthält die feuchtigkeitshärtende Polyurethan-Zusammensetzung insgesamt weniger als 0.1 Gewichts-% monomere Diisocyanate. Eine solche

Zusammensetzung kann in vielen Ländern ohne Gefahrstoff-Einstufung transportiert und verkauft werden.

Die feuchtigkeitshärtende Polyurethan-Zusammensetzung wird insbesondere unter Ausschluss von Feuchtigkeit hergestellt und bei Umgebungstemperatur in feuchtigkeitsdichten Gebinden aufbewahrt. Ein geeignetes feuchtigkeitsdichtes Gebinde besteht insbesondere aus einem gegebenenfalls beschichteten Metall und/oder Kunststoff und stellt insbesondere ein Fass, ein Container, ein Hobbock, ein Eimer, ein Kanister, eine Büchse, ein Beutel, ein Schlauchbeutel, eine Kartusche oder eine Tube dar.

Die feuchtigkeitshärtende Polyurethan-Zusammensetzung kann in Form einer einkomponentigen oder in Form einer mehrkomponentigen, insbesondere zweikomponentigen, Zusammensetzung vorliegen.

Als "einkomponentig" wird eine Zusammensetzung bezeichnet, bei welcher alle Bestandteile der Zusammensetzung im gleichen Gebinde vorliegen und welche als solche lagerstabil ist.

Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Die feuchtigkeitshärtende Polyurethan-Zusammensetzung ist bevorzugt einkomponentig. Sie ist bei geeigneter Verpackung und Aufbewahrung lagerstabil, typischerweise während mehreren Monaten bis zu einem Jahr oder länger.

Bei der Applikation der feuchtigkeitshärtenden Polyurethan-Zusammensetzung beginnt der Prozess der Aushärtung. Als Ergebnis davon entsteht die ausgehärtete Zusammensetzung.

Im Fall einer einkomponentigen Zusammensetzung wird diese als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und gegebenenfalls einen Katalysator und/oder einen Härter enthält, zugemischt werden, oder die Zusammensetzung kann nach ihrer Applikation mit einer solchen Beschleuniger-Komponente in Kontakt gebracht werden.

Bei der Aushärtung reagieren die Isocyanatgruppen unter dem Einfluss von Feuchtigkeit untereinander. Für den Fall, dass die feuchtigkeitshärtende Polyurethan-Zusammensetzung ein blockiertes Amin enthält, reagieren die Isocyanatgruppen zudem mit den hydrolysierenden blockierten Aminogruppen. Die Gesamtheit dieser zur Aushärtung der Zusammensetzung führenden Reaktionen der Isocyanatgruppen wird auch als Vernetzung bezeichnet.

Die zur Aushärtung der feuchtigkeitshärtenden Polyurethan-Zusammensetzung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung eine feste Schicht ausgehärteter Zusammensetzung ("Haut"). Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substrat(en), auf welche(s) die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Die feuchtigkeitshärtende Polyurethan-Zusammensetzung wird bevorzugt bei Umgebungstemperatur appliziert, insbesondere im Bereich von etwa -10 bis 50°C, bevorzugt im Bereich von -5 bis 45°C, insbesondere 0 bis 40°C.

Falls gewünscht kann die feuchtigkeitshärtende Polyurethan-Zusammensetzung auch im erwärmten Zustand appliziert werden, beispielsweise mit einer Temperatur von etwa 60°C.

Die Aushärtung der feuchtigkeitshärtenden Polyurethan-Zusammensetzung erfolgt bevorzugt bei Umgebungstemperatur.

Die feuchtigkeitshärtende Polyurethan-Zusammensetzung verfügt über eine lange Verarbeitungszeit (Offenzeit) und eine schnelle Aushärtung.

Als "Offenzeit" wird die Zeitspanne bezeichnet, während der die Zusammensetzung nach der Applikation ohne Einbussen in ihrer Funktionsfähigkeit verarbeitet oder nachbearbeitet werden kann. Für den Fall, dass die Zusammensetzung als Klebstoff verwendet wird, bezeichnet die Offenzeit insbesondere auch die Zeitspanne, innerhalb welcher eine Verklebung nach ihrer Applikation gefügt sein muss, um eine genügende Haftung aufzubauen. Bei einer einkomponentigen Zusammensetzung ist die Offenzeit spätestens dann überschritten, wenn es zur Hautbildung gekommen ist oder wenn kein ausreichender Haftungsaufbau zu den Substraten mehr stattfindet.

Bevorzugt wird die feuchtigkeitshärtende Polyurethan-Zusammensetzung verwendet als elastischer Klebstoff und/oder Dichtstoff, insbesondere für Klebe-oder Abdichtungsanwendungen in der Bau- und Fertigungsindustrie oder im Fahrzeugbau, insbesondere für die Parkettverklebung, Montage, Anbauteilverklebung, Modulverklebung, Scheibenverklebung, Fugenabdichtung, Karosserieabdichtung, Nahtabdichtung oder Hohlraumversiegelung.

Elastische Verklebungen im Fahrzeugbau sind beispielsweise das Ankleben von Teilen wie Kunststoffabdeckungen, Zierleisten, Flansche, Stossstangen, Führerkabinen oder andere Anbauteile an die lackierte Karosserie eines Fahrzeugs, oder das Einkleben von Scheiben in die Karosserie, wobei die Fahrzeuge insbesondere Automobile, Lastkraftwagen, Busse, Schienenfahrzeuge oder Schiffe darstellen. Besonders bevorzugt ist die Verwendung als Klebstoff für die Ersatzverglasung von Fahrzeugen.

Die feuchtigkeitshärtende Polyurethan-Zusammensetzung ist bevorzugt so formuliert, dass sie eine pastöse Konsistenz mit strukturviskosen Eigenschaften aufweist. Eine solche Zusammensetzung wird mittels einer geeigneten Vorrichtung appliziert, beispielsweise aus handelsüblichen Kartuschen oder Fässern oder Hobbocks, insbesondere in Form einer Raupe, wobei diese eine im Wesentlichen runde oder dreieckige Querschnittsfläche aufweisen kann.

Geeignete Substrate, welche mit der feuchtigkeitshärtenden Polyurethan-Zusammensetzung verklebt und/oder abgedichtet werden können, sind insbesondere
- Glas, Glaskeramik oder mit Siebdruckkeramik beschichtetes Glas oder Polycarbonat;
- Metalle oder Legierungen wie Aluminium, Kupfer, Eisen, Stahl, Buntmetalle, inklusive oberflächenveredelte Metalle oder Legierungen wie verzinkte oder verchromte Metalle;
- beschichtete oder lackierte Substrate, insbesondere pulverbeschichtete Metalle oder Legierungen oder lackierte Bleche;
- Farben oder Lacke, insbesondere Automobildecklacke;
- ausgehärtete Klebstoffe, insbesondere auf der Basis von Polyurethan, silanmodifiziertem Polymer oder Polysulfid, insbesondere gealterte Klebstoffe (Restkleberaupe), oder Karosserieflansch, welcher durchgehend oder stellenweise Restkleberaupe aufweist;
- Kunststoffe wie Hart- oder Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Reparatur- oder Nivelliermassen auf Basis PCC (Polymer-modifizierter Zementmörtel) oder ECC (Epoxidharz-modifizierter Zementmörtel);
- Isolierschäume, insbesondere aus EPS, XPS, PUR, PIR, Steinwolle, Glaswolle oder geschäumtem Glas (Foamglas);
- Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor, lackierte Fliesen oder gestrichener Beton, Asphalt oder Bitumen.
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Ein weiterer Gegenstand der Erfindung ist ein Verfahren zum Verkleben oder Abdichten, umfassend die Schritte
(i) Applizieren der beschriebenen feuchtigkeitshärtenden Polyurethan-Zusammensetzung
   - auf ein erstes Substrat und Kontaktieren der Zusammensetzung mit einem zweiten Substrat innerhalb der Offenzeit der Zusammensetzung, oder
   - auf ein erstes und auf ein zweites Substrat und Fügen der beiden Substrate innerhalb der Offenzeit der Zusammensetzung, oder
   - zwischen zwei Substrate,
(ii) Aushärten der Zusammensetzung durch Kontakt mit Feuchtigkeit.

Bevorzugt ist mindestens eines der Substrate ausgewählt aus der Gruppe bestehend aus Glas, Glaskeramik, mit Siebdruckkeramik beschichtetes Glas oder Polycarbonat, Metallen, Legierungen, pulverbeschichteten Metallen oder Legierungen, Farben und Lacken und ausgehärtetem Klebstoff, insbesondere Restkleberaupe und/oder mit Automobildecklacken lackierte Bleche.

Aus der Applikation und Aushärtung der feuchtigkeitshärtenden Polyurethan-Zusammensetzung bzw. aus dem Verfahren zum Verkleben oder Abdichten wird ein Artikel erhalten, welcher mit der Zusammensetzung verklebt oder abgedichtet ist. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, oder ein Anbauteil davon.

Ein weiterer Gegenstand der Erfindung ist somit ein Artikel, erhalten aus dem beschriebenen Verfahren zum Verkleben oder Abdichten.

Besonders bevorzugt wird das Verfahren zum Verkleben eingesetzt für das elastische Verkleben von Scheiben an Fahrzeugen, insbesondere für die Ersatzverglasung.

Die feuchtigkeitshärtende Polyurethan-Zusammensetzung weist vorteilhafte Eigenschaften auf. Sie verfügt über besonders gute Haftungseigenschaften bei langer Offenzeit, insbesondere auf Restkleberaupe, besonders gute Applikationseigenschaften, insbesondere einer besonders guten Auspressbarkeit bei hoher Standfestigkeit und kurzem Fadenzug, einer matten Oberfläche nach der Aushärtung und einer besonders guten Witterungsbeständigkeit, bei unverändert guter Aushärtung, Festigkeit, Dehnbarkeit, Elastizität und Gefahrstoff-Einstufung. Damit ist die Zusammensetzung besonders geeignet als elastischer Klebstoff im Fahrzeugbau, insbesondere für den Ersatz von defekten, elastisch verklebten Windschutzscheiben an Automobilen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" (NK) wird eine Temperatur von 23±1 °C und eine relative Luftfeuchtigkeit von 50±5% bezeichnet.

Die verwendeten Chemikalien waren, sofern nicht anders bezeichnet, von Sigma-Aldrich Chemie GmbH.

### verwendete Polyole:

- Priplast^{®} 1837:: Dimerfettsäure-basiertes amorphes Polyesterdiol, OH-Zahl 110 mg KOH/g, bei Raumtemperatur flüssig (von Croda)
- Priplast^{®} 1838:: Dimerfettsäure-basiertes amorphes Polyesterdiol, OH-Zahl 56 mg KOH/g, bei Raumtemperatur flüssig (von Croda)
- Priplast^{®} 3196:: Dimerfettsäure-basiertes amorphes Polyesterdiol, OH-Zahl 37 mg KOH/g, bei Raumtemperatur flüssig (von Croda)
- Priplast^{®} 3197:: Dimerfettsäure-basiertes amorphes Polyesterdiol, OH-Zahl 56 mg KOH/g, bei Raumtemperatur flüssig (von Croda)
- Desmophen^{®} 5031 BT:: Glycerin-gestartetes Ethylenoxid-terminiertes Poly-oxypropylentriol, OH-Zahl 28 mg KOH/g (von Covestro)
- Acclaim^{®} 4200:: Polyoxypropylendiol, OH-Zahl 28 mg KOH/g (von Covestro)
- Dynacoll^{®} 7360: bei Raumtemperatur festes, teilkristallines Polyester-diol, OH-Zahl 34 mg KOH/g (von Evonik)

### Herstellung von Isocyanatgruppen-haltigen Polymeren:

Die **Viskosität** wurde mit einem thermostatisierten Kegel-Platten-Viskosimeter Rheotec RC30 (Kegeldurchmesser 25 mm, Kegelwinkel 1°, Kegelspitze-Platten-Abstand 0.5 mm, Scherrate 50 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgäniger Derivatisierung mittels N-Propyl-4-nitrobenzylamin bestimmt.

### Polymer DP-1:

597.5 g Priplast^{®} 1838 und 402.5 g 4,4'-Diphenylmethandiisocyanat (Desmodur^{®} 44 MC L, von Covestro) wurden bei 80°C zu einem Polyesterurethan-Polymer mit einem NCO-Gehalt von 11.0 Gewichts-%, einer Viskosität von 36 Pa·s bei 20°C und einem Gehalt an 4,4'-Diphenylmethandiisocyanat von ca. 26 Gewichts-% umgesetzt.

Anschliessend wurden die flüchtigen Bestandteile, insbesondere ein Grossteil des 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene Polyesterurethan-Polymer war leicht trüb und bei Raumtemperatur von flüssiger, viskoser Konsistenz. Es wies einen NCO-Gehalt von 2.8 Gewichts-%, eine Viskosität von 312 Pa·s bei 20°C, 119 Pa·s bei 30°C, 48 Pa·s bei 40°C und 11.5 Pa·s bei 60°C und einen Gehalt an 4,4'-Diphenylmethandiisocyanat von 0.09 Gewichts-% auf.

### Polymer DP-2:

445.0 g Priplast^{®} 1837 und 555.0 g 4,4'-Diphenylmethandiisocyanat (Desmodur^{®} 44 MC L, von Covestro) wurden bei 80°C zu einem Polyesterurethan-Polymer mit einem NCO-Gehalt von 14.8 Gewichts-%, einer Viskosität von 6.5 Pa·s bei 20°C und einem Gehalt an 4,4'-Diphenylmethandiisocyanat von ca. 35 Gewichts-% umgesetzt.

Anschliessend wurden die flüchtigen Bestandteile, insbesondere ein Grossteil des 4,4'-Diphenylmethandiisocyanats, wie für Polymer **DP-1** beschrieben entfernt. Das so erhaltene Polyesterurethan-Polymer war leicht trüb und bei Raumtemperatur von flüssiger, viskoser Konsistenz. Es wies einen NCO-Gehalt von 4.8 Gewichts-%, eine Viskosität von 11 Pa·s bei 60°C und einen Gehalt an 4,4'-Diphenylmethandiisocyanat von 0.06 Gewichts-% auf.

### Polymer DP-3:

663.0 g Priplast^{®} 3196 und 337.0 g 4,4'-Diphenylmethandiisocyanat (Desmodur^{®} 44 MC L, von Covestro) wurden bei 80 °C zu einem Polyesterurethan-Polymer mit einem NCO-Gehalt von 9.4 Gewichts-%, einer Viskosität von 57 Pa·s bei 20°C und einem Gehalt an 4,4'-Diphenylmethandiisocyanat von ca. 23 Gewichts-% umgesetzt.

Anschliessend wurden die flüchtigen Bestandteile, insbesondere ein Grossteil des 4,4'-Diphenylmethandiisocyanats, wie für Polymer **DP-1** beschrieben entfernt. Das so erhaltene Polyesterurethan-Polymer war leicht trüb und bei Raumtemperatur von flüssiger, viskoser Konsistenz. Es wies einen NCO-Gehalt von 2.2 Gewichts-%, eine Viskosität von 17 Pa·s bei 60°C und einen Gehalt an 4,4'-Diphenylmethandiisocyanat von 0.06 Gewichts-% auf.

### Polymer DP-4:

600.0 g Priplast^{®} 3197 und 400.0 g 4,4'-Diphenylmethandiisocyanat (Desmodur^{®} 44 MC L, von Covestro) wurden bei 80°C zu einem Polyesterurethan-Polymer mit einem NCO-Gehalt von 10.7 Gewichts-%, einer Viskosität von 28 Pa·s bei 20°C und einem Gehalt an 4,4'-Diphenylmethandiisocyanat von ca. 25 Gewichts-% umgesetzt.

Anschliessend wurden die flüchtigen Bestandteile, insbesondere ein Grossteil des 4,4'-Diphenylmethandiisocyanats, wie für Polymer **DP-1** beschrieben entfernt. Das so erhaltene Polyesterurethan-Polymer war leicht trüb und bei Raumtemperatur von flüssiger, viskoser Konsistenz. Es wies einen NCO-Gehalt von 2.8 Gewichts-%, eine Viskosität von 16 Pa·s bei 60°C und einen Gehalt an 4,4'-Diphenylmethandiisocyanat von 0.08 Gewichts-% auf.

### Polymer DP-5:

620.0 g Priplast^{®} 1838 und 379.9 g 1-Isocyanato-3,3,5-trimethyl-5-isocyanatomethylcyclohexan (Vestanat^{®} IPDI, von Evonik) wurden in Gegenwart von 0.01 g Dibutylzinndilaurat bei 80°C zu einem Polyesterurethan-Polymer mit einem NCO-Gehalt von 11.8 Gewichts-%, einer Viskosität von 17 Pa·s bei 20°C und einem Gehalt an 1-Isocyanato-3,3,5-trimethyl-5-isocyanatomethylcyclohexan von ca. 20 Gewichts-% umgesetzt.

Anschliessend wurden die flüchtigen Bestandteile, insbesondere ein Grossteil des 1-Isocyanato-3,3,5-trimethyl-5-isocyanatomethylcyclohexan, in einem Kurzwegverdampfer destillativ entfernt (Manteltemperatur 160°C, Druck 0.1 bis 0.005 mbar). Das so erhaltene Polyesterurethan-Polymer war leicht trüb und bei Raumtemperatur von flüssiger, viskoser Konsistenz. Es wies einen NCO-Gehalt von 3.1 Gewichts-%, eine Viskosität von 153 Pa·s bei 20°C und einen Gehalt an 1-Isocyanato-3,3,5-trimethyl-5-isocyanatomethylcyclohexan von 0.23 Gewichts-% auf.

### Polymer PP-1:

725.0 g Desmophen^{®} 5031 BT und 275.0 g 4,4'-Diphenylmethandiisocyanat (Desmodur^{®} 44 MC L, von Covestro) wurden nach bekanntem Verfahren zu einem Polyetherurethan-Polymer mit einem NCO-Gehalt von 7.6 Gewichts-%, einer Viskosität von 6.5 Pa·s bei 20°C und einem Gehalt an 4,4'-Diphenylmethandiisocyanat von ca. 20 Gewichts-% umgesetzt.

Anschliessend wurden die flüchtigen Bestandteile, insbesondere ein Grossteil des 4,4'-Diphenylmethandiisocyanats, wie für Polymer **DP-1** beschrieben entfernt. Das so erhaltene Polyetherurethan-Polymer wies einen NCO-Gehalt von 1.7 Gewichts-%, eine Viskosität von 19 Pa·s bei 20°C und einen Gehalt an 4,4'-Diphenylmethandiisocyanat von 0.04 Gewichts-% auf.

### Polymer PP-2:

727.0 g Acclaim^{®} 4200 und 273.0 g 4,4'-Diphenylmethandiisocyanat (Desmodur^{®} 44 MC L, von Covestro) wurden nachbekanntem Verfahren zu einem Polyetherurethan-Polymer mit einem NCO-Gehalt von 7.6 Gewichts-%, einer Viskosität von 5.2 Pa·s bei 20°C und einem Gehalt an 4,4'-Diphenylmethandiisocyanat von ca. 18 Gewichts-% umgesetzt.

Anschliessend wurden die flüchtigen Bestandteile, insbesondere ein Grossteil des 4,4'-Diphenylmethandiisocyanats, wie für Polymer **DP-1** beschrieben entfernt. Das so erhaltene Polyetherurethan-Polymer wies einen NCO-Gehalt von 1.8 Gewichts-%, eine Viskosität von 15.2 Pa·s bei 20°C und einen Gehalt an 4,4'-Diphenylmethandiisocyanat von 0.08 Gewichts-% auf.

### Polymer M:

1000 g Dynacoll^{®} 7360 und 142 g 4,4'-Diphenylmethandiisocyanat (Desmodur^{®} 44 MC L, von Covestro) wurden bei 80°C zu einem bei Raumtemperatur festen Polymer mit einem NCO-Gehalt von 2.0 Gewichts-% und einem Gehalt an 4,4'-Diphenylmethandiisocyanat von 2.3 Gewichts-% umgesetzt.

Die Polymere **DP-1** bis **DP-5** sind Dimerfettsäure-basierte Polyesterurethan-Polymere. Die Polymere **PP-1** und **PP-2** sind Polyetherurethan-Polymere. Das Polymer **M** ist ein bei Raumtemperatur festes Polymer, welches als Schmelzkomponente eingesetzt wurde.

### Feuchtigkeitshärtende Polyurethan-Zusammensetzungen:

### Zusammensetzungen Z1 bis Z5:

Für jede Zusammensetzung wurden die in Tabelle 1 angegebenen Inhaltsstoffe in den angegebenen Mengen (in Gewichtsteilen) mittels eines Planetenmischers unter Vakuum und Feuchtigkeitsausschluss gut vermischt, die Zusammensetzung in einen luftdicht verschlossenen Schlauchbeutel abgefüllt und bei Raumtemperatur aufbewahrt.

Zur schnellen Aushärtung wurde der Zusammensetzung bei der Applikation eine Wasser-haltige Beschleuniger-Komponente beigemischt. Dazu wurde die Zusammensetzung aus einem PowerCure Dispenser (erhältlich bei Sika Schweiz AG) appliziert, wobei der Zusammensetzung beim Auspressen 2 Gewichts-% einer Wasser-haltigen Paste zudosiert und mittels dynamischem Mischer eingemischt wurde.

Die **Haftung auf Restkleberaupe** wurde an einer ausgehärteten und gealterten Klebstoff-Schicht bestimmt. Dazu wurde ein handelsüblicher Polyurethan-Klebstoff für die Scheibenverklebung (Sikaflex^{®}-250 SV-3, von Sika Automotive Hamburg GmbH) in Form einer Dreiecksraupe von ca. 8 mm Breite und ca. 10 mm Höhe auf einen Glaskörper appliziert, mit einem silikonbeschichteten Trennpapier bedeckt, auf eine Schichtdicke von ca. 5 mm verpresst, während 7 Tagen im Normklima ausgehärtet, das Trennpapier entfernt und die verpresste Kleberaupe während 14 Tagen bei 80°C gealtert. Anschliessend wurde die ausgehärtete und gealterte Kleberaupe bis auf eine Schichtdicke von ca. 1 mm vom Glaskörper weggeschnitten.

Danach wurde im Normklima die beschleunigte Zusammensetzung aus dem PowerCure Dispenser in Form einer Dreiecksraupe von ca. 8 mm Breite und ca. 10 mm Höhe auf Streifen aus silikonbeschichtetem Trennpapier appliziert. Nach der in Tabelle 1 jeweils angegebenen Wartezeit wurden die auf das Trennpapier applizierten Dreiecksraupen umgedreht und so auf der auf dem Glaskörper verbliebenen Restkleberaupe platziert, dass das Trennpapier oben und die Zusammensetzung mit der Restkleberaupe in Kontakt war. Anschliessend wurde die Zusammensetzung auf eine Schichtdicke von ca. 5 mm verpresst, während 7d im Normklima ausgehärtet, dann das Trennpapier entfernt und die Haftung der ausgehärteten Zusammensetzung auf der Restkleberaupe getestet, indem die ausgehärtete Zusammensetzung am schmalen Ende knapp über der Klebefläche eingeschnitten, das eingeschnittene Ende der Zusammensetzung mit einer Rundzange festgehalten und versucht wurde, die Zusammensetzung vom Substrat (= Restkleberaupe) wegzuziehen. Dann wurde die Zusammensetzung erneut bis auf das Substrat eingeschnitten, wobei der freigeschnittene Teil mit der Rundzange aufgerollt und wiederum versucht wurde, die Zusammensetzung vom Substrat abzuziehen. So wurde die Zusammensetzung ziehend vom Substrat weggeschnitten. Anschliessend wurde anhand des Bruchbildes die Haftung nach folgender Skala beurteilt:
"sehr gut" steht für mehr als 95% Kohäsionsbruch,
"gut" steht für 75 bis 95% Kohäsionsbruch,
"mässig" steht für 50 bis 75% Kohäsionsbruch,
"schlecht" steht für weniger als 50% Kohäsionsbruch, und
"keine Haftung" steht für 0% Kohäsionsbruch bzw. 100% Adhäsionsbruch.

Die Resultate sind in Tabelle 1 angegeben.

Mit "(Ref.)" bezeichnete Zusammensetzungen sind Vergleichsbeispiele.

**Tabelle 1: Zusammensetzung (in Gewichtsteilen) und Eigenschaften von Z1 bis Z5. ¹ 2,2'-Dimorpholinodiethylether**

| **Zusammensetzung** | | | **Z1** | **Z2** | **Z3** | **Z4** | **Z5 (Ref.)** |
|---|---|---|---|---|---|---|---|
| | **Polymer DP-1** | | 5.0 | - | - | - | - |
| | **Polymer DP-2** | | - | 5.0 | - | - | - |
| | **Polymer DP-3** | | - | - | 5.0 | - | - |
| | **Polymer DP-4** | | - | - | - | 5.0 | - |
| | **Polymer PP-1** | | 36.8 | 36.8 | 36.8 | 36.8 | 41.8 |
| | **Polymer M** | | 2.8 | 2.8 | 2.8 | 2.8 | 2.8 |
| | Dioctyladipat | | 17.1 | 17.1 | 17.1 | 17.1 | 17.1 |
| | Kreide | | 20.0 | 20.0 | 20.0 | 20.0 | 20.0 |
| | Russ | | 18.0 | 18.0 | 18.0 | 18.0 | 18.0 |
| | DMDEE ¹ | | 0.3 | 0.3 | 0.3 | 0.3 | 0.3 |
| **Haftung auf Restkleberaupe:** | | | | | | | |
| nach Wartezeit | | 0 min | sehr gut | gut | sehr gut | sehr gut | mässig |
| | | 5 min | sehr gut | gut | sehr gut | sehr gut | gut |
| | | 7 min | sehr gut | gut | sehr gut | sehr gut | mässig |
| | | 10 min | sehr gut | mässig | sehr gut | gut | schlecht |

### Zusammensetzungen Z6 und Z7:

Jede Zusammensetzung wurde unter Verwendung der in Tabelle 2 angegebenen Inhaltsstoffe in den angegebenen Mengen (in Gewichtsteilen) wie für Zusammensetzung **Z1** beschrieben hergestellt, in eine luftdicht verschlossene Aluminiumkartusche abgefüllt und bei Raumtemperatur aufbewahrt.

Jede Zusammensetzung wurde zwischen zwei silikonbeschichtete Trennpapiere appliziert, zu einem Film von 2 mm Dicke verpresst und während 14 Tagen im Normklima gelagert. Nach Entfernen der Trennpapiere wurden rechteckige Prüfkörper (75 x 150 mm) aus dem ausgehärteten Film ausgeschnitten, in einem QUV-Bewitterungsgerät während der in Tabelle 2 angegebenen Zeit geprüft und anschliessend die bewitterte Oberfläche auf **Russ-Verschmutzung** (Ausrussen bzw. carbon black staining) geprüft, indem ein transparentes Klebeband zuerst von Hand auf die Oberfläche gepresst und dann auf ein weisses Druckerpapier geklebt wurde. War dann eine hellgraue Färbung sichtbar, wurde die Russ-Verschmutzung als "nein" beurteilt, bei einer dunkelgrauen Färbung wurde die Russ-Verschmutzung als "mittel" und bei einer schwarzen Färbung wurde die Russ-Verschmutzung als "stark" beurteilt.

Die Resultate sind in Tabelle 2 angegeben.

Mit "(Ref.)" bezeichnete Zusammensetzungen sind Vergleichsbeispiele.

**Tabelle 2: Zusammensetzung (in Gewichtsteilen) und Eigenschaften von Z6 und Z7. ¹ Tinuvin^{®} 292 (von BASF)**

| **Zusammensetzung** | **Z6** | **Z7 (Ref.)** |
|---|---|---|
| **Polymer DP-1** | 5.0 | - |
| **Polymer PP-1** | 22.3 | 27.3 |
| **Polymer PP-2** | 10.0 | 10.0 |
| Diisodecylphthalat | 16.6 | 16.6 |
| Stabilisator¹ | 1.0 | 1.0 |
| Kreide | 25.0 | 25.0 |
| Russ | 20.0 | 20.0 |
| 2,2'-Dimorpholinodiethylether | 0.1 | 0.1 |
| **Russ-Verschmutzung:** | | |
| 200h QUV | nein | mittel |
| 500h QUV | nein | stark |
| 3'000h QUV | nein | stark |

### Zusammensetzungen Z8 bis Z16:

Jede Zusammensetzung wurde unter Verwendung der in den Tabellen 3 und 4 angegebenen Inhaltsstoffe in den angegebenen Mengen (in Gewichtsteilen) wie für Zusammensetzung **Z1** beschrieben hergestellt, in eine luftdicht verschlossene Aluminiumkartusche abgefüllt und bei Raumtemperatur aufbewahrt.

Jede Zusammensetzung wurde folgendermassen geprüft:
Als Mass für die Verarbeitbarkeit bzw. Applizierbarkeit der Zusammensetzung wurden die Auspresskraft, die Standfestigkeit und der Fadenzug bestimmt.

Dabei stehen eine geringe Auspresskraft, eine hohe Standfestigkeit und ein kurzer Fadenzug für eine gute die Verarbeitbarkeit bzw. Applizierbarkeit.

Die **Auspresskraft** wurde bei 23°C und bei 5°C bestimmt. Eine erste verschlossene Kartusche wurde während 7 Tagen bei 23°C gelagert und eine zweite während 6 Tagen bei 23°C und anschliessend während 24 Stunden bei 5°C gelagert. Dann wurde jeweils die Auspresskraft mittels eines Auspressgeräts (Zwick/Roell Z005) gemessen, indem eine Düse mit 5 mm Innendurchmesser auf die Kartusche aufgeschraubt und dann die benötigte Kraft gemessen wurde, um die Zusammensetzung mit einer Auspressgeschwindigkeit von 60 mm/min durch die Düse auszupressen. Der angegebene Wert ist ein Mittelwert aus den Kräften, die nach einem Auspressweg von 22 mm, 24 mm, 26 mm und 28 mm gemessen wurden.

Von jeder Zusammensetzung wurde die **Standfestigkeit** bestimmt, indem im Normklima eine Dreiecksraupe von ca. 8 mm Breite und ca. 20 mm Höhe so auf eine vertikale Fläche aus Pappkarton appliziert wurde, dass die Dreiecksraupe als 8 mm breiter horizontaler Streifen mit 20 mm vorstehender Höhe (= Spitze) angeordnet war. Nach der Aushärtung im Normklima wurde beurteilt, ob und wie sich die Position der applizierten Raupe verändert hatte. Insbesondere wurde bestimmt, wie weit sich die Spitze, gemessen aus der horizontalen Lage, nach unten abgesenkt hatte. Ein Absinken von weniger als 1 mm wurde als "sehr gut", 1 bis weniger als 3 mm als "gut", 4 bis 7 mm als "mittel" und 8 mm und mehr als als "schlecht" beurteilt. Als "flüssig" wird eine Zusammensetzung bezeichnet, bei welcher sich das applizierte Material nicht nur an der Spitze, sondern auch an der Grundfläche der applizierten Dreiecksraupe nach unten bewegte, also herunterlief.

Von einigen Zusammensetzungen wurde der **Fadenzug** wurde bestimmt, indem an der Dreiecksraupe, welche zur Bestimmung der Standfestigkeit appliziert worden war, die Länge des durch das Wegziehen der Applikationskartusche entstandenen Fadens ausgemessen wurde.

Als Mass für die Verarbeitungszeit (Offenzeit) wurde die **Hautbildungszeit** bestimmt. Dazu wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Zur Bestimmung der mechanischen Eigenschaften wurde jede Zusammensetzung zwischen zwei silikonbeschichteten Trennpapieren zu einem Film von 2 mm Dicke verpresst und während 14 Tagen im Normklima gelagert. Nach Entfernen der Trennpapiere wurden einige Prüfkörper ausgestanzt und wie folgt beschrieben geprüft:
Zur Bestimmung von **Zugfestigkeit** (Zugfestigk.), **Bruchdehnung** (Bruchdehn.) und **E-Modul** bei 0.5-5% Dehnung wurden Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min geprüft.

Weiter wurden einige Prüfkörper zur Bestimmung des **Weiterreisswiderstandes** ausgestanzt und gemäss DIN ISO 34 bei einer Zuggeschwindigkeit von 500 mm/min geprüft.

Der **Aspekt** und der **Glanzgrad** wurden optisch bestimmt am für die Bestimmung der mechanischen Eigenschaften hergestellten Film. Als "schön" wird ein nichtklebriger, ebenmässiger Film ohne Blasen bezeichnet.

Zur Bestimmung der Festigkeit einer Klebeverbindung wurde von einigen Zusammensetzungen die Zugscherfestigkeit **(ZSF)** auf Glas bestimmt. Dazu wurden Verbundkörper hergestellt, indem zwei mit Isopropanol entfettete und mit Sika^{®} Aktivator-100 (von Sika Schweiz) vorbehandelte Glasplatten so verklebt wurden, dass die überlappende Klebeverbindung eine Dimension von 12 x 25 mm und eine Dicke von 4 mm aufwies und die Glasplatten an den Kopfenden vorstanden. Nach einer Lagerung der Verbundkörper während 14 d im Normklima wurde die Zugscherfestigkeit nach DIN EN 1465 bei einer Zuggeschwindigkeit von 20 mm/min geprüft. Als Mass für die Hitze- und Hydrolysestabilität der Verklebung wurden weitere Prüfkörper zusätzlich während 7 Tagen in einem Umluftofen bei 100°C, bzw. 7 Tagen bei 70°C/100% relativer Feuchtigkeit, gelagert, im Normklima abgekühlt und auf die gleiche Weise geprüft. Die Resultate sind mit dem Zusatz "14d NK" bzw. "7d 100°C" bzw. "7d 70/100" versehen.

Die Resultate sind in Tabelle 3 und 4 angegeben.

Mit "(Ref.)" bezeichnete Zusammensetzungen sind Vergleichsbeispiele.

**Tabelle 3: Zusammensetzung (in Gewichtsteilen) und Eigenschaften von Z8 bis Z13. ¹ 2,2'-Dimorpholinodiethylether**

| **Zusammensetzung** | | | **Z8** | **Z9 (Ref.)** | **Z10** | **Z11 (Ref.)** | **Z12** | **Z13 (Ref.)** |
|---|---|---|---|---|---|---|---|---|
| | **Polymer DP-1** | | 5.0 | - | 5.0 | - | 5.0 | - |
| | **Polymer PP-1** | | 36.8 | 41.8 | 38.2 | 43.2 | 39.6 | 44.6 |
| | **Polymer M** | | 2.8 | 2.8 | 1.4 | 1.4 | - | - |
| | Dioctyladipat | | 17.1 | 17.1 | 17.1 | 17.1 | 17.1 | 17.1 |
| | Kreide | | 20.0 | 20.0 | 20.0 | 20.0 | 20.0 | 20.0 |
| | Russ | | 18.0 | 18.0 | 18.0 | 18.0 | 18.0 | 18.0 |
| | DMDEE¹ | | 0.3 | 0.3 | 0.3 | 0.3 | 0.3 | 0.3 |
| Auspresskraft [N] | | 23°C | 809 | 919 | 653 | 616 | 471 | 249 |
| | | 5°C | 1002 | 1235 | 812 | 869 | 685 | 468 |
| Standfestigkeit | | | sehr gut | sehr gut | sehr gut | mittel | sehr gut | schlecht, flüssig |
| Fadenzug [mm] | | | 6 | 5 | 8 | 11 | 12 | n.m. |
| Hautbildungszeit [min] | | | 17 | 17 | 17 | 18 | 17 | 22 |
| Zugfestigkeit [MPa] | | | 8.4 | 7.7 | 8.3 | 7.6 | 8.6 | 8.2 |
| Bruchdehnung [%] | | | 502 | 487 | 490 | 466 | 513 | 477 |
| E-Modul [MPa] | | | 6.1 | 5.8 | 5.5 | 5.2 | 4.6 | 4.0 |
| Weiterreisswiderstand [N/mm] | | | 12.3 | 11.7 | 12.0 | 11.2 | 11.7 | 10.0 |
| Aspekt / Glanzgrad | | | schön / matt | schön / glänzend | schön / matt | schön / glänzend | schön / matt | schön / glänzend |
| ZSF [MPa] | | 14d NK | 4.7 | 4.5 | 4.1 | 4.5 | 4.6 | 4.2 |
| | | 7d 100°C | 5.9 | 5.8 | 7.0 | 5.5 | 5.3 | 6.8 |
| | | 7d 70/100 | 5.2 | 5.3 | 5.0 | 3.2 | 5.2 | 3.5 |

**Tabelle 4: Zusammensetzung (in Gewichtsteilen) und Eigenschaften von Z14 bis Z16.**

| **Zusammensetzung** | **Z14** | **Z15** | **Z16** |
|---|---|---|---|
| **Polymer DP-2** | 5.0 | - | - |
| **Polymer DP-3** | - | 5.0 | - |
| **Polymer DP-4** | - | | 5.0 |
| **Polymer PP-1** | 36.8 | 36.8 | 36.8 |
| **Polymer M** | 2.8 | 2.8 | 2.8 |
| Dioctyladipat | 17.1 | 17.1 | 17.1 |
| Kreide | 20.0 | 20.0 | 20.0 |
| Russ | 18.0 | 18.0 | 18.0 |
| 2,2'-Dimorpholinodiethylether | 0.3 | 0.3 | 0.3 |
| Auspresskraft [N] 23°C | 959 | 633 | 539 |
| Standfestigkeit | sehr gut | sehr gut | sehr gut |
| Hautbildungszeit [min] | 17 | 16 | 16 |
| Zugfestigkeit [MPa] | 7.8 | 6.9 | 7.4 |
| Bruchdehnung [%] | 472 | 493 | 482 |
| E-Modul [MPa] | 8.1 | 5.1 | 5.6 |
| Weiterreisswiderstand [N/mm] | 13.6 | 12.5 | 11.4 |
| Aspekt / Glanzgrad | schön / matt | schön / matt | schön / matt |

## Patentansprüche

1. Bei Raumtemperaur flüssiges, Isocyanatgruppen-haltiges Polyesterurethan-Polymer, erhalten aus der Umsetzung von mindestens einem monomeren Diisocyanat und einem Dimerfettsäure-basierten Polyester-Diol mit einer OH-Zahl im Bereich von 28 bis 120 mg KOH/g in einem NCO/OH-Verhältnis im Bereich von 4/1 bis 10/1 und nachfolgender Entfernung eines Grossteils des monomeren Diisocyanats mittels eines geeigneten Trennverfahrens, **dadurch gekennzeichnet, dass** es einen NCO-Gehalt im Bereich von 1.5 bis 6 Gewichts-% und einen Gehalt an monomeren Diisocyanaten von höchstens 0.5 Gewichts-% aufweist.

2. Polyesterurethan-Polymer gemäss Anspruch 1, **dadurch gekennzeichnet, dass** das monomere Diisocyanat 4,4'-Diphenylmethandiisocyanat ist.

3. Polyesterurethan-Polymer gemäss einem der Ansprüche 1 bis 2, **dadurch gekennzeichnet, dass** das Dimerfettsäure-basierte Polyester-Diol amorph ist.

4. Polyesterurethan-Polymer gemäss einem der Ansprüche 1 bis 3, **dadurch gekennzeichnet, dass** das NCO/OH-Verhältnis im Bereich von 4/1 bis 8/1, insbesondere 4/1 bis 7/1, liegt.

5. Polyesterurethan-Polymer gemäss einem der Ansprüche 1 bis 4, **dadurch gekennzeichnet, dass** es eine Viskosität bei 20°C im Bereich von 100 bis 1'000 Pa·s, insbesondere 100 bis 500 Pa·s aufweist, bestimmt mit einem Kegel-Platten-Viskosimeter mit einem Kegeldurchmesser 25 mm, Kegelwinkel 1°, Kegelspitze-Platten-Abstand 0.5 mm bei einer Scherrate von 50 s⁻¹.

6. Verwendung des Polyesterurethan-Polymers gemäss einem der Ansprüche 1 bis 5 als Haftvermittler in einer feuchtigkeitshärtenden Polyurethan-Zusammensetzung.

7. Verwendung gemäss Anspruch 6, **dadurch gekennzeichnet, dass** das Polyesterurethan-Polymer in einer Menge im Bereich von 0.5 bis 15 Gewichts-%, bevorzugt 1 bis 10 Gewichts-%, insbesondere 2 bis 6 Gewichts-%, bezogen auf die gesamte Polyurethan-Zusammensetzung eingesetzt wird.

8. Feuchtigkeitshärtende Polyurethan-Zusammensetzung, welche geeignet ist als elastischer Klebstoff und/oder Dichtstoff, enthaltend
- mindestens ein Isocyanatgruppen-haltiges Polyetherurethan-Polymer, und
- das Isocyanatgruppen-haltige Polyesterurethan-Polymer gemäss einem der Ansprüche 1 bis 5,
wobei die feuchtigkeitshärtende Polyurethan-Zusammensetzung bei einer Temperatur von 23 °C flüssig, gegebenenfalls pastös, und somit bei einer Temperatur von 23 °C gut verarbeitbar ist.

9. Feuchtigkeitshärtende Polyurethan-Zusammensetzung gemäss Anspruch 8, **dadurch gekennzeichnet, dass** die Polyether-Segmente im Polyetherurethan-Polymer aus mindestens 80% 1,2-Propylenoxy-Einheiten und gegebenenfalls zusätzlich 1,2-Ethylenoxy-Einheiten bestehen.

10. Feuchtigkeitshärtende Polyurethan-Zusammensetzung gemäss einem der Ansprüche 8 bis 9, **dadurch gekennzeichnet, dass** das Polyetherurethan-Polymer einen NCO-Gehalt im Bereich von 1 bis 5 Gewichts-%, insbesondere 1 bis 3 Gewichts-%, hat.

11. Feuchtigkeitshärtende Polyurethan-Zusammensetzung gemäss einem der Ansprüche 8 bis 10, **dadurch gekennzeichnet, dass** mindestens ein weiterer Bestandteil ausgewählt aus Schmelzkomponenten, blockierten Aminen, Füllstoffen, Weichmachern, Diisocyanat-Oligomeren, Katalysatoren und Stabilisatoren enthalten ist.

12. Feuchtigkeitshärtende Polyurethan-Zusammensetzung gemäss einem der Ansprüche 8 bis 11, **dadurch gekennzeichnet, dass** sie
- 20 bis 60 Gewichts-% Isocyanatgruppen-haltiges Polyetherurethan-Polymer,
- 0.5 bis 10 Gewichts-% erfindungsgemässes Dimerfettsäure-basiertes Isocyanatgruppen-haltiges Polyesterurethan-Polymer,
- 0 bis 5 Gewichts-% Schmelzkomponente,
- 20 bis 60 Gewichts-% Füllstoffe,
- 0 bis 35 Gewichts-% Weichmacher,
und gegebenenfalls weitere Bestandteile, insbesondere blockierte Amine, Diisocyanat-Oligomere, Katalysatoren oder Stabilisatoren, enthält.

13. Feuchtigkeitshärtende Polyurethan-Zusammensetzung gemäss einem der Ansprüche 8 bis 12, **dadurch gekennzeichnet, dass** insgesamt weniger als 0.1 Gewichts-% monomere Diisocyanate enthalten sind.

14. Verfahren zum Verkleben oder Abdichten, umfassend die Schritte
(i) Applizieren der Polyurethan-Zusammensetzung gemäss einem der Ansprüche 8 bis 13
- auf ein erstes Substrat und Kontaktieren der Zusammensetzung mit einem zweiten Substrat innerhalb der Offenzeit der Zusammensetzung, oder
- auf ein erstes und auf ein zweites Substrat und Fügen der beiden Substrate innerhalb der Offenzeit der Zusammensetzung, oder
- zwischen zwei Substrate,
(ii) Aushärten der Zusammensetzung durch Kontakt mit Feuchtigkeit.

15. Artikel, erhalten aus dem Verfahren gemäss Anspruch 14.

## Claims

1. Room temperature liquid polyester urethane polymer containing isocyanate groups, obtained from the reaction of at least one monomeric diisocyanate and a dimer fatty acid-based polyester diol having an OH number in the range from 28 to 120 mg KOH/g in an NCO/OH ratio in the range from 4/1 to 10/1, followed by removal of a majority of the monomeric diisocyanate by means of a suitable separation method, **characterized in that** it has an NCO content in the range from 1.5% to 6% by weight and a monomeric diisocyanate content of not more than 0.5% by weight.

2. Polyester urethane polymer according to Claim 1, **characterized in that** the monomeric diisocyanate is diphenylmethane 4,4'-diisocyanate.

3. Polyester urethane polymer according to either of Claims 1 and 2, **characterized in that** the dimer fatty acid-based polyester diol is amorphous.

4. Polyester urethane polymer according to any of Claims 1 to 3, **characterized in that** the NCO/OH ratio is in the range from 4/1 to 8/1, especially 4/1 to 7/1.

5. Polyester urethane polymer according to any of Claims 1 to 4, **characterized in that** it has a viscosity at 20°C in the range from 100 to 1'000 Pa·s, especially 100 to 500 Pa·s, determined with a cone-plate viscometer having a cone diameter 25 mm, cone angle 1°, cone tip-plate distance 0.5 mm, at a shear rate of 50 s⁻¹.

6. Use of the polyester urethane polymer according to any of Claims 1 to 5 as adhesion promoter in a moisture-curing polyurethane composition.

7. Use according to Claim 6, **characterized in that** the polyester urethane polymer is used in an amount in the range from 0.5% to 15% by weight, preferably 1% to 10% by weight, especially 2% to 6% by weight, based on the overall polyurethane composition.

8. Moisture-curing polyurethane composition suitable as elastic adhesive and/or sealant, comprising
- at least one polyether urethane polymer containing isocyanate groups, and
- the polyester urethane polymer containing isocyanate groups according to any of Claims 1 to 5,
wherein the moisture-curing polyurethane composition is in liquid and possibly paste form at a temperature of 23°C and thus has good processibility at a temperature of 23°C.

9. Moisture-curing polyurethane composition according to Claim 8, **characterized in that** the polyether segments in the polyether urethane polymer consist of at least 80% 1,2-propyleneoxy units and optionally additionally 1,2-ethyleneoxy units.

10. Moisture-curing polyurethane composition according to either of Claims 8 and 9, **characterized in that** the polyether urethane polymer has an NCO content in the range from 1% to 5% by weight, especially 1% to 3% by weight.

11. Moisture-curing polyurethane composition according to any of Claims 8 to 10, **characterized in that** at least one further constituent selected from meltable components, blocked amines, fillers, plasticizers, diisocyanate oligomers, catalysts and stabilizers is present.

12. Moisture-curing polyurethane composition according to any of Claims 8 to 11, **characterized in that** it contains
- 20% to 60% by weight of polyether urethane polymer containing isocyanate groups,
- 0.5% to 10% by weight of inventive dimer fatty acid-based polyester urethane polymer containing isocyanate groups,
- 0% to 5% by weight of meltable component,
- 20% to 60% by weight of fillers,
- 0% to 35% by weight of plasticizers,
and optionally further constituents, especially blocked amines, diisocyanate oligomers, catalysts or stabilizers.

13. Moisture-curing polyurethane composition according to any of Claims 8 to 12, **characterized in that** a total of less than 0.1% by weight of monomeric diisocyanates is present.

14. Method of bonding or sealing, comprising the steps of
(i) applying the polyurethane composition according to any of Claims 8 to 13
- to a first substrate and contacting the composition with a second substrate within the open time of the composition, or
- to a first and to a second substrate and joining the two substrates within the open time of the composition, or
- between two substrates,
(ii) curing the composition by contact with moisture.

15. Article obtained from the method according to Claim 14.

## Revendications

1. Polymère de polyesteruréthane contenant des groupes isocyanate, liquide à température ambiante, obtenu par la transformation d'au moins un diisocyanate monomère et d'un polyesterdiol à base d'acide gras dimère présentant un indice d'OH dans la plage de 28 à 120 mg de KOH/g dans un rapport NCO/OH dans la plage de 4/1 à 10/1 et par élimination consécutive d'une grande partie du diisocyanate monomère au moyen d'un procédé de séparation approprié, **caractérisé en ce qu'**il présente une teneur en NCO dans la plage de 1,5 à 6% en poids et une teneur en diisocyanates monomères d'au plus 0,5% en poids.

2. Polymère de polyesteruréthane selon la revendication 1, **caractérisé en ce que** le diisocyanate monomère est le diisocyanate de 4,4'-diphénylméthane.

3. Polymère de polyesteruréthane selon l'une des revendications 1 à 2, **caractérisé en ce que** le polyesterdiol à base d'acide gras dimère est amorphe.

4. Polymère de polyesteruréthane selon l'une des revendications 1 à 3, **caractérisé en ce que** le rapport NCO/OH se situe dans la plage de 4/1 à 8/1, en particulier de 4/1 à 7/1.

5. Polymère de polyesteruréthane selon l'une des revendications 1 à 4, **caractérisé en ce qu'**il présente une viscosité à 20°C dans la plage de 100 à 1000 Pa.s, en particulier de 100 à 500 Pa.s, déterminée à l'aide d'un viscosimètre à cône-plaque présentant un diamètre de cône de 25 mm, un angle de cône de 1°, une distance pointe de cône-plaque de 0,5 mm à un taux de cisaillement de 50 s⁻¹.

6. Utilisation du polymère de polyesteruréthane selon l'une des revendications 1 à 5 en tant que promoteur d'adhérence dans une composition de polyuréthane durcissant sous l'effet de l'humidité.

7. Utilisation selon la revendication 6, **caractérisée en ce que** le polymère de polyesteruréthane est utilisé en une quantité dans la plage de 0,5 à 15% en poids, de préférence de 1 à 10% en poids, en particulier de 2 à 6% en poids, par rapport à la totalité de la composition de polyuréthane.

8. Composition de polyuréthane durcissant sous l'effet de l'humidité, qui contient comme adhésif et/ou matériau d'étanchéité élastique, contenant
- au moins un polymère de polyétheruréthane contenant des groupes isocyanate et
- le polymère de polyesteruréthane contenant des groupes isocyanate selon l'une des revendications 1 à 5, la composition de polyuréthane durcissant sous l'effet de l'humidité étant liquide, le cas échéant pâteuse à une température de 23°C et présentant donc une bonne aptitude à la mise en œuvre à une température de 23°C.

9. Composition de polyuréthane durcissant sous l'effet de l'humidité selon la revendication 8, **caractérisée en ce que** les segments de polyéther dans le polymère de polyétheruréthane sont constitués d'au moins 80% de motifs 1,2-propylénoxy et le cas échéant en plus de motifs 1,2-éthylénoxy.

10. Composition de polyuréthane durcissant sous l'effet de l'humidité selon l'une des revendications 8 à 9, **caractérisée en ce que** le polymère de polyétheruréthane présente une teneur en NCO dans la plage de 1 à 5% en poids, en particulier de 1 à 3% en poids.

11. Composition de polyuréthane durcissant sous l'effet de l'humidité selon l'une des revendications 8 à 10, **caractérisée en ce qu'**au moins un autre constituant choisi parmi les composants fusibles, les amines bloquées, les charges, les plastifiants, les oligomères de diisocyanate, les catalyseurs et les stabilisants est contenu.

12. Composition de polyuréthane durcissant sous l'effet de l'humidité selon l'une des revendications 8 à 11, **caractérisée en ce qu'**elle contient
- 20 à 60% en poids de polymère de polyétheruréthane contenant des groupes isocyanate,
- 0,5 à 10% en poids de polymère de polyesteruréthane contenant des groupes isocyanate à base d'acide gras dimère selon l'invention,
- 0 à 5% en poids de composant fusible,
- 20 à 60% en poids de charges,
- 0 à 35% en poids de plastifiant,
et le cas échant d'autres constituants, en particulier des amines bloquées, des oligomères de diisocyanate, des catalyseurs ou des stabilisants.

13. Composition de polyuréthane durcissant sous l'effet de l'humidité selon l'une des revendications 8 à 12, **caractérisée en ce qu'**elle contient au total moins de 0,1% en poids de diisocyanates monomères.

14. Procédé pour le collage ou le bouchage comprenant les étapes :
(i) application de la composition de polyuréthane selon l'une des revendications 8 à 13
- sur un premier substrat et mise en contact de la composition avec un deuxième substrat dans le temps ouvert de la composition ou
- sur un premier et sur un deuxième substrat et assemblage des deux substrats dans le temps ouvert de la composition ou
- entre deux substrats,
(ii) durcissement de la composition par contact avec de l'humidité.

15. Article, obtenu à partir du procédé selon la revendication 14.
